# EUROPEAN PATENT SPECIFICATION

(11) **EP 1 781 972 B1**
(45) Date of publication and mention of the grant of the patent: **15.09.2010**
(21) Application number: 05712371.3
(22) Date of filing: 01.02.2005
(51) Int. Cl.: F16K 1/12

(54) **A VALVE**
VENTIL
VALVE

(30) Priority: 30.07.2004 US 592698 P; 30.07.2004 WO PCT/US2004/024732
(43) Date of publication of application: 09.05.2007
(73) Proprietor: GL Tool and Manufacturing Co. Inc., Livingston, NJ 07039 (US)
(72) Inventor: LIEPOLD, Gerhard, Watchung, NJ 07060 (US); BIZER, Dietrich, Madison, NJ 07940 (US)
(74) Representative: MacLachlan, Norman William
(86) International application number: PCT/US2005/002909
(87) International publication number: WO 2006/022816

(56) References cited:
- WO-A-03/038322
- WO-A-03/090842
- AT-U- 6 052
- US-B1- 6 354 466

## Description

The present invention relates to a valve apparatus and in particular to a valve apparatus useful in systems for the sterile transfer of fluids.

Validation and accountability are vital in most scientific industries and especially so in the pharmaceutical and biotechnological industries. A major challenge to these industries is the need to demonstrate accurately and reproducibly that sterility is achieved and maintained throughout production lines within a plant. This must be done in a manner which meets the stringent requirements of regulatory bodies such as the United States FDA. Acceptable standards can be difficult to be met when a substance is transferred from one sterile location to another sterile location by non direct means.

One current practice includes providing a holding vessel into which substance can be transferred by means of a connecting valve. The holding vessel is transferred to the second sterile location and the substance is then transferred from the holding vessel into the second sterile location via one or more connecting valves. The connecting valves and holding vessel can be sterilised using conventional techniques such as gas, radiation or steam sterilisation. However during connection of the connecting valve to the first sterile location, the external connecting surface of the connecting valve is exposed to the atmosphere and sterility of the valve is compromised.

Alternative methods of substance transfer suffer from similar problems.

For example, in the use of an autoclavable port, where a non-sterile male port is attached to an empty non-sterile bulk vessel prior to sterilization, the entire assembled apparatus is then sterilised by autoclaving. However, a major disadvantage of this technique is that the vessel must be empty before sterilisation.

Alternatively, an irradiated port can be used, where a non-sterile male port is attached to an empty non-sterile disposable bag prior to sterilisation of the whole by irradiation. Again a major disadvantage associated with this system is that the bag must be empty before sterilisation.

A further method of substance transfer involves connecting a transfer port to a vessel under aseptic conditions. With this method it is irrelevant whether or not the vessel is empty or filled. However despite the necessity to undertake these actions in a designated 'Grade A' zone, there is an increased risk of contamination due to the making and breaking of various connections. The mere fact that a 'Grade A' zone is required to complete these actions requires a significant financial investment by a company wishing to employ this technique.

Another technique incorporates the use of a tube fuser. A sterile bulk vessel is attached to tubing emanating from a sterile port through a tube fuser. This technique is undesirable for numerous reasons including the restricted choice of tubing. This in turn limits the types of substance that can be transferred through the tubing. It is also undesirable to use wetted tubing. Furthermore there is also a potential risk of cross-contamination and re-contamination.

Despite the numerous attempts to find a sterile method of substance transfer none have been wholly successful. In all of the above techniques the sterility of the port or valve used to transfer the substance from one vessel to another is compromised during the connection process or is susceptible to contamination. This is undesirable and leads to problems when validating a product.

Piston-operated valves for the above applications are known. These act by moving a piston up and down or sliding over and back within an apertured housing so as to cover or uncover the fluid communication apertures of the housing. O-ring seals are provided for sealing between the open and closed valve positions. Such valves therefore have slots for receiving the O-rings and the difficulties of assuring that these slots and the spaces about them are not subject to contamination render them questionable for use in sterile transfer systems.

GB 1,573,482 discloses a rigid tubular member positioned within a flexible tube with one end of the tubular member being blocked by an integrally formed plug. A rigid shaft extends from the plug along the flexible tube and an area of weakness is defined between the plug and the tubular member. The plug is broken free from the tubular member by manually gripping the flexible tube from outside and pulling, bending or twisting the rigid shaft thus breaking it off the tubular member and opening the tubular member for fluid transfer. The opened end can be closed again by sealingly re-inserting the plug into it.

AT 006,052 U1 describes a valve having a hollow housing with two open ends and a piston movable within the housing. A deformable O-ring is disposed around an end portion of the piston which blocks one of the open ends of the housing, the O-ring providing a seal between the end portion of the piston and the opening. The piston is connected to the housing via a screw thread so that rotation of the housing about the piston causes the piston to move away from the opening to open the valve. Reverse rotation of the housing re-closes the valve.

WO 03/090,842 provides a piston-operated valve having an elongate open-ended housing in which one of the ends is blocked with a "tear-away" seal formed continuously with the housing. On operation of an actuator, the piston moves within the housing and breaks the seal thus opening the valve for passage of fluid. The broken-away seal is retained in a deployed position away from the open end of the valve. This valve cannot be re-closed after the seal has been broken and therefore there exists a risk of contamination of the environment from e.g. biological material being transferred through the valve.

The present invention seeks to alleviate further the above-mentioned problems associated with the prior art valves.

Accordingly, the present invention provides a valve comprising a body having first and second open ends and a passageway for fluid between the ends, the first end including a coupling means for sealingly connecting the body about an opening of an external device and a first seal formed with the coupling means closing the open area of the first end, which in use is placeable in register with the opening of the external device, the valve further including a seal displacement means movable within the body so as to displace the first seal permitting fluid to pass along the passageway between the ends, the coupling means and the first seal presenting an external sterilisable mating surface for sealingly mating with a mating surface about the opening in the external device, and
an actuation means for moving the displacement means in a first actuation between a ready state in which the first seal is intact and the valve is closed and an open state in which the first seal is separated from the coupling means and moved with the displacement means away from the mating surface so that the valve is open for passage of fluid, the actuation means being engaged with the displacement means via a connecting means and with the body, the connecting means enabling the displacement means to move linearly and non-rotationally along a straight path within the body without side deflection from said straight path;
and wherein the displacement means includes a first plastically deformable portion encircling an outer surface of a member of the displacement means and the coupling means includes a second plastically deformable portion encircling its open area which becomes exposed when the first seal is separated therefrom, the displacement means being movable in a second subsequent actuation to bring the first and second plastically deformable portions into engagement so as to form a second seal between said first and second portions, the displacement means comprising a face continuous with the first portion so that the second seal and the face close the fluid passage.

Advantageously, a mutually engageable gripping means is provided on the first seal and on the displacement means enabling the displacement means to move the first seal away from the mating surface by stamping the first seal outwardly or withdrawing the first seal into the body of the valve.

In one embodiment, the continuous face comprises a portion of the outer surface of the displacement means facing the opening of the first end of the valve and the outer face of the first seal wherein said portion and the first seal are sealingly coupled together. In another embodiment the continuous face may comprise a face on the displacement means facing the opening of the first end of the valve.

In a most preferred embodiment the displacement means is so engaged with the actuation means via the connecting means that during third and subsequent alternating actuations the first and second plastically deformable portions alternately separate and engage again in order to re-open or re-close the valve. These multiple actuations can be performed as many times as required for any possible reason.

In a most preferred embodiment, the displacement means is engaged with the actuation means via a connection means so that during the first actuation the connection means causes the displacement means to move within the body in a direction towards the second end of the valve, and the first seal is withdrawn into the interior of the body; and during the second subsequent actuation the connection means causes the displacement means to move in the reverse direction towards the first end of the valve to engage the first and the second plastically deformable portions and form the second seal.

In another embodiment, the displacement means is engaged with the actuation means via a connection means so that during the first actuation the connection means causes the displacement means to move within the body in a direction towards the first end of the valve, and the first seal is pushed outwardly form the opening of the first end of the valve into a passageway of a separate vessel; and during the second subsequent actuation the connection means causes the displacement means to move further in the same direction to engage the first and the second plastically deformable portions and form the second seal.

The first seal is most preferably formed integrally with the coupling means, and ideally an endless weakened junction region is provided between the coupling means and the first seal, said junction region enclosing the seal and said junction region comprising at least one fracture line so that when the displacement means moves on first actuation to open the valve it ruptures the junction region along the at least one fracture line thus separating the first seal from the coupling means and opening the valve for passage of fluid.

In a preferred embodiment, the junction region is formed by way of reduction of material thickness between the first seal and the coupling means. Most preferably, the reduction in thickness is obtained by forming a notch between the first seal and the coupling means wherein the notch is defined by a pair of converging surfaces, one of which belongs to the first seal and the other of which belongs to the coupling means and wherein the line of intersection of said surfaces defines the fracture line of the weakened junction region. In a most preferred arrangement, the notch is formed on those surfaces of the first seal and the coupling means which in use face the interior of the body of the valve. Preferably, the converging surface of the coupling means is substantially parallel to a longitudinal axis extending between the ends of the valve. This enables a portion of the displacement means comprising the first plastically deformable portion to occupy wholly the opening of the coupling means upon engagement of the first and second portions. The junction region ideally has a substantially uniform cross-section along the entire length thereof.

The provision of a junction region having uniform cross-section and a fracture line formed by intersection of a pair of converging surfaces enables quicker and easier separation of the first seal from the coupling means. Also, such a fracture line yields neat and clean fracture surfaces upon separation of the first seal from the coupling means thus reducing the risk of loose particles of the material contaminating the fluid flowing through the valve.

Ideally, one of the first and the second plastically deformable portions has an endless encircling sharp rim and the other plastically deformable portion has an endless encircling curved surface area so that when the displacement means is moved to close the valve, the sharp rim engages the curved surface area and displaces a portion of the curved surface area thereby deforming the materials of the sharp rim and the curved surface area to form the second seal at the opening of the valve. The contact between the sharp rim and the curved surface is sufficiently close and tight to form the second seal which prevents fluid from passing to from the valve.

It will be appreciated that the first and the second plastically deformable portions may be provided as attachments releasably couplable with the seal displacement means and the body, respectively. These portions may be made from a material different from those of the body and the displacement means as long as they are plastically deformable to enable formation of the second seal and can withstand sterilisation. It is essential that no lasting plastic deformation of the material of the first and the second portions occurs during sterilisation, and the first and second portions remain within a predetermined range of dimensions to ensure effective sealing, otherwise the integrity of the second seal may be compromised.

Preferably, the body of the valve, the first seal and the seal displacement means are manufactured from a plastic material. It will be appreciated that other materials may be used for manufacture of the body, the first seal and the seal displacement means. Such other materials may include metal, ceramic or any other material found suitable to withstand rigours of sterilisation process.

Ideally, the first plastically deformable portion is integrally formed with the member of the displacement means, the member being disposed proximal the first open end of the valve in use and comprising the curved surface area; and the second plastically deformable portion is integrally formed with the coupling means and comprises the sharp rim.

In a most preferred arrangement, in the ready state of the valve, the first and second plastically deformable portions are axially separated along a longitudinal axis of the valve extending between the ends of the valve and the displacement means is engaged with the actuation means via the connecting means so that the distance travelled by the displacement means on the second actuation is sufficient to bring said portions into engagement to form the second seal. The linear, non-rotational motion of the displacement means with no side deflection from a straight path within the body of the valve ensures integrity of the second seal.

In a preferred embodiment, the gripping means comprise a snap-fit arrangement between the first seal and the seal displacement means, comprising first and second snap fit members provided on the first seal and the seal displacement means, respectively.

Ideally, the first snap-fit member comprises a wall upstanding from the inner facing side of the first seal, the wall having a series of alternating ribs and grooves encircling an outer surface thereof, and the second snap-fit member is provided in a recess formed in a portion of the displacement means proximal the first seal in use, the recess being configured for receiving the wall, the surface of the portion of the displacement means which defines the recess comprising a series of alternating ribs and grooves which match those of the wall and encircle said surface, so that on assembly of the valve, when the wall is received in the recess, the ribs of the wall and in the recess first resiliently deform allowing the wall to enter the recess, and then snap into respective grooves of the wall and the recess to couple the first seal with the seal displacement means.

Preferably, the displacement means comprises a piston having an internal bore which defines a portion of the fluid passageway of the valve, the piston having a first end which is open and a second end, the member comprising the curved surface area being provided at the second end of the piston; the piston further comprising one or more apertures provided in a wall of the piston adjacent the second end of the piston so that fluid may pass between the interior of the piston and the first end of the valve via the or each aperture.

In one arrangement, a portion of the coupling means surrounding the first seal may be provided as an attachment which includes the first seal and the coupling means. The attachment is secured to the body of the valve at the first end of the valve and is fixed in place by suitable means such as, for example, screws, snap-fit coupling etc. The body and the attachment are so configured that the contact between the body and the attachment is fluid-tight. A new attachment with an unbroken seal is then placed into the position blocking the open first end of the valve. Another modification of such an attachment may be formed and shaped to provide a secondary function of a sealing washer between the valve and the vessel to which it is coupled when the valve and vessel are secured together. In such a modification the first seal is ideally formed integrally with the washer, and when the washer is placed between the vessel and the valve, the seal blocks the open end of the valve. The seal of the washer is ideally coupled with the piston of the valve so that on movement of the piston within the valve the seal is separated from the washer to open the valve. In valve arrangements where an attachable seal is used, the housing of the valve can be made from hard materials such as stainless steel or ceramics which can withstand multiple sterilisations. If a stainless steel housing is used, then after each use the attachment can be removed and the housing can be re-sterilised and used again.

Ideally, the actuation means comprises a hollow actuator body movably mounted on the exterior of the valve body, the actuator body being connected to the piston via a cam pair to translate movement of the actuator in relation to the valve body into movement of the piston within the valve body, said cam pair cooperating with a guide means to enable the linear non-rotational motion of the piston along a straight path in the fluid passageway of the valve body so that no side deflection of the piston occurs during said motion.

In a most preferred arrangement, the cam has a first region for moving the first seal away from the position blocking the opening of the valve, a second region for displacing the piston in order to engage the first and second portions to form the second seal.

Ideally, the valve body and the actuator are cylindrical and the actuator is rotatably mounted on the cylindrical exterior of the body, the cam being endless and encircling the internal surface of the actuator and wherein a return region connects a start end of the first cam region and a terminal end of the second cam region to enable multiple revolutions of the actuator about the housing for repeated re-opening and re-closing of the valve.

It will be appreciated that other cam pairs may be provided for translation of movement of the actuator about the housing into linear motion of the piston. Most preferably, a pair of cam followers are disposed at opposing locations on the external surface of the piston.

Most preferably, the actuation means includes the actuation means includes a releasable safety lock means for preventing undesired movement of the seal displacement means and a handle by operation of which a user moves the actuator relative to the body, and the safety lock means comprises a tongue releasably engageable with the body for preventing movement of the actuator, the tongue being releasably engagable with the body upon completion of each actuation.

In another embodiment, the valve according to the invention may be activated by a sliding actuator. Such a sliding actuator has a pair of opposing parallel side walls, at least one wall having a cam extending along the wall. The actuator is mounted on the exterior of the housing and is slidably movable laterally perpendicular to the longitudinal axis of the body of the valve. The cam of the actuator is engaged with at least one cam follower similar to that described above so that the sliding motion of the actuator in relation to the housing is translated to the piston via the cam pair and results in linear longitudinal motion of the piston within the housing.

Ideally, the valve has a stop means for preventing the actuator from moving in a reverse direction about the housing after completion of any actuation. This has the advantage that the first seal may not inadvertently or mischievously be returned to a position in which it appears to block the opening of the first end, which would be undesirable given that the integrity of the seal has been irretrievably lost by the first actuation which displaced the first seal.

Conveniently, the valve has at least one third seal for sealing between the body and the displacement means, the third seal comprising at least one deformable plastics rib formed on the body or on the displacement means for contacting the other of the body or the displacement means and for sealing between them when they are stationary or moving relative to one another. Ideally, the rib is formed integrally with the body or the displacement means. The rib is ideally sufficiently deformable and flexible so that it drags or wipes along the surface with which it is in contact as the body or the displacement means slide with respect to one another. In a preferred arrangement, a plurality of ribs are provided, axially spaced apart from one another along the path of relative movement between the body and the displacement means. Ideally, at least one rib formed intermediate the connecting means and the first end and at least one rib formed between the connecting means and the second end.

The valve of the invention is usable as a single-use valve which is discarded on completion of the fluid transfer following the first actuation. The second seal arrangement allows the valve to be re-closed after the first seal has been broken free from the coupling means. Re-closure may be required when, for example, after the first actuation of the valve a leak occurs at any location in the fluid transfer line or in any other hazardous circumstances. Re-closure is also a desirable feature where the valve has been used in a process of handling hazardous materials. Such materials will contaminate the interior of the valve and could also contaminate the outside environment upon dismantling of the apparatus were it not possible to re-close the valve. A valve intended for single-use is ideally manufactured from plastics material. Such a single-use valve has an advantage that costly operations such as cleaning, storage, testing and validation are excluded from the technological process. Also, a single-use disposable valve reduces the risk of cross-contamination.

The present valve may be either a fixed length valve in which the travel of the piston occurs within the housing, or a variable length one in which the piston projects outwardly as the first seal is withdrawn into the interior of the housing.

The above described arrangement may be modified so that first and second seals close each of the first and second open ends of the body, the second end of the valve including a second coupling means having a first seal formed therewith, each first seal being movable by a separate displacement means axially spaced apart from each other within the body and wherein each displacement means includes a first plastically deformable portion and each coupling means includes a second plastically deformable portion so that both ends of the valve can be opened and/or closed. In one arrangement, each displacement means is connected to a separate actuation means to enable independent opening and closing of the valve ends. In another arrangement, each displacement means is connected to the same actuation means enabling an operator to change the state of the valve with a single actuation.

In yet another arrangement, the valve comprises a pair of bodies each having first and second open ends, the bodies being coupled to each other at the second ends so that the passageway of the valve extends between the opposing first ends of the pair of bodies and wherein first and second seals close the first open ends of the bodies, each first seal being movable by a separate displacement means disposed in its respective body and wherein each displacement means includes a first plastically deformable portion and a second plastically deformable portion surrounds the openings of the coupling means at each of the first ends so that the first ends of the valve can be opened and/or closed.

Such a "double-ended" valve may be either a fixed length valve in which the travel of the displacement means occurs within the valve body, or a variable length in which portions of the displacement means project outwardly as the first seals are separated from the coupling means. A fixed length valve is useful for connecting rigid pipes or vessels having fixed length between their openings. A variable length valve is suitable for connecting openings of flexible tubing, or indeed an opening of a rigid pipe and an opening of a flexible tube.

In another aspect the invention provides a process for the sterile transfer of fluid from a first vessel to a second vessel comprising the steps of:
a) coupling a first valve and a second valve to respective open ends of a length of a conduit;
b) placing the conduit with the valves attached in a bag and sterilising the bag and its contents;
c) opening the bag and removing the valve/conduit assembly thereby exposing the external sealing surfaces of the valves to environmental contamination;
d) coupling the first valve to a first vessel and sterilising the interior of the first vessel thereby also resterilising the exposed face of the first valve;
e) transferring the first vessel with the attached valve/conduit assembly to the site of a second vessel;
f) coupling the second valve to the second vessel and sterilising the interior of the second vessel thereby also resterilising the exposed face of the second valve; and
g) opening the valves thereby breaking the first seal of each valve and allowing fluid to flow between the first and second vessels;
h) re-closing each valve by deploying the actuating means to close the second seals;
i) sanitising the interiors of the first and second vessels together with the closed faces of the valves facing the vessels; and
j) de-coupling the valves from the vessels and discarding the valve/conduit assembly.

Of course, the process is not limited to transfer of fluid between two vessels and many different fluid sources, including pipes may be connected in the above described manner.

Ideally, the process includes effecting any desired number of closing and opening steps of either valve between steps g) and h).

It will be appreciated that the first and second vessels can reside at different locations or be in close proximity to each other. It will also be appreciated that instead of a pair of valves connected to a length of a conduit, a single "double-ended" valve as described above can be used.

Optionally, the valve may include a non-releasable lock for blocking the actuator on completion of the second actuation of the valve, providing a valve intended for a single use only.

The invention will now be described with reference to the accompanying drawings which show by way of example only several embodiments of a valve in accordance with the invention. In the drawings:-
Figure 1 is a perspective view of a valve according to the invention;
Figure 2 is a cross-sectional elevation view of the valve of Figure 1;
Figure 3 is a plan view of the valve of Figure 1;
Figure 4 is a cross-sectional elevation of a housing of the valve according to the invention;
Figure 5 is an elevation view of the housing of Figure 4;
Figure 6 is a cross-sectional plan view of the housing of Figure 4 along the line A - A;
Figure 7 is a cross-sectional plan view of the housing of Figure 4 along the line B - B;
Figure 8 is an enlarged view of area X of Figure 4;
Figure 8a is an enlarged view of area Z of Figure 8;
Figure 9 is an enlarged view of area Y of Figure 4;
Figure 10 is a cross-sectional elevation of a piston of the valve according to the invention;
Figure 10a is an enlarged view of area V of Figure 10 showing a side seal of the piston;
Figure 10b is a modification of the side seal of Figure 10a;
Figure 11 is a cross-sectional plan view of the piston of Figure 10 along the line D - D;
Figure 12 is an enlarged view of area U of Figure 10;
Figure 12a is an enlarged view of area W of Figure 12;
Figure 13 is an enlarged view of area H of Figure 2;
Figure 13a shows a modification of a coupling arrangement between the seal and the piston;
Figure 14 is an enlarged view of area K of Figure 35 showing re-sealing surfaces of the valve according to the invention;
Figure 15 is a perspective view of a first modification of a coupling at a second end of the valve of Figure 1;
Figure 15a is a cross-sectional elevation of the coupling of Figure 15 coupled with a tubing end;
Figure 16 is a perspective view of a second modification of the coupling at the second end of the valve of Figure 1;
Figure 16a is a cross-sectional elevation of the coupling of Figure 16;
Figure 17 is a perspective view of a valve having a third modification of the coupling at the second end;
Figure 17a is a cross-sectional elevation of a portion of the valve of Figure 17 showing the coupling;
Figures 18 and 19 are plan and elevation views, respectively of one component half of a rotary actuator of the valve of Figure 1;
Figure 19a is an enlarged view of area G of Figure 19;
Figures 20 is a plan view of the other component half of a rotary actuator of the valve of Figure 1;
Figure 21 is an elevation of the component half of Figure 20 as seen in the direction of arrow F in Figure 20;
Figures 22 and 23 are plan and elevation views, respectively of one component half of a modification of the rotary actuator;
Figures 24 is a plan view of the other component half of the modified rotary actuator;
Figure 25 is an elevation of the component half of Figure 24 as seen in the direction of arrow F in Figure 20;
Figure 26 is an enlarged view of area J of Figure 2 showing the side seal of the piston engaged with the interior of the housing of the valve;
Figure 27 shows the modification of the side seal engaged with the interior of the housing;
Figures 28 to 30 are side, rear and front elevations of a cam follower of the valve according to the invention;
Figure 31 is an enlarged area R of Figure 2 showing a seal blocking an opening of the valve in a ready-to-open state of the valve;
Figure 32 shows the same portion of the valve as Figure 31 but with the seal withdrawn into the interior of the valve;
Figure 33 shows the same portion of the valve as Figure 31 but with the opening re-sealed as shown in Figure 14;
Figure 34 is a plan view of a fluid transfer assembly comprising two valves according to the invention providing a fluid transfer path between two reservoirs;
Figures 35a and 35b are schematic illustrations of a fluid transfer assembly similar to that of Figure 34 but including a filter;
Figures 36a and 36b are schematic illustrations of a fluid transfer assembly similar to that of Figure 34 but including a coupling leading to a test sample manifold;
Figure 37 is a schematic illustration of a valve of Figure 17 coupled to non-flexible tubing;
Figure 38 is a partial cross-sectional elevation of a valve according to the invention having a removable portion containing the seal;
Figure 39 is a cross-sectional elevation view of a second embodiment of a valve according to the invention;
Figure 40 is a plan view of the seal which blocks an open end of the valve of Figure 39 in a ready-to -open state of the valve;
Figure 41 is an enlarged area L of Figure 39 showing the seal in the ready-to-open state of the valve;
Figure 42 shows the same portion of the valve as Figure 40 but with the seal stamped outwardly from its position blocking the opening of the valve;
Figure 43 shows the same portion of the valve as Figure 40 but with the opening re-sealed in a manner similar to that shown in Figure 14;
Figure 44 is an elevation of one component half of a rotary actuator of the valve of Figure 39;
Figure 45 is a cross-sectional elevation of an embodiment of the valve having seals at both ends of the valve;

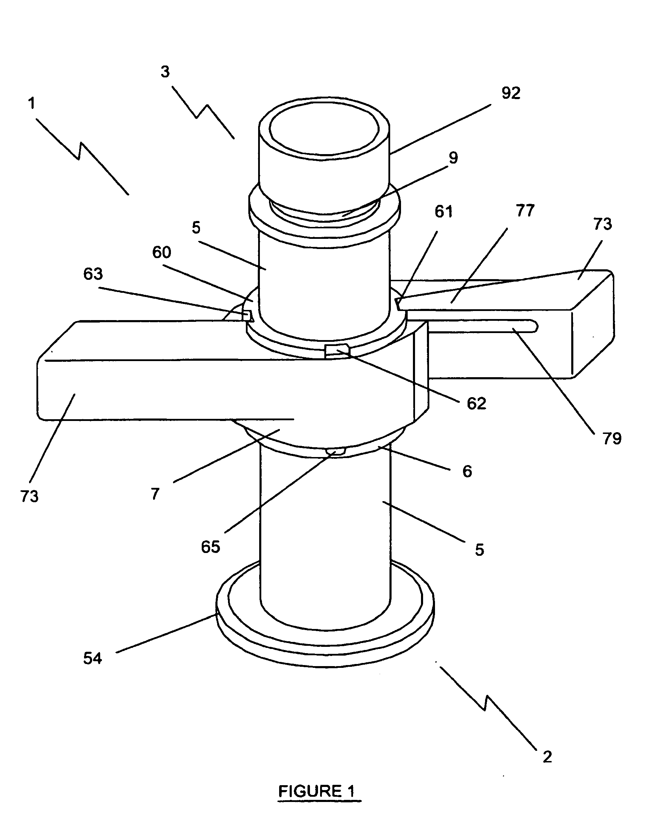

Referring to the drawings and initially to Figures 1 to 3, there is shown a valve indicated generally by the reference numeral 1. The valve 1 has a body having first and second open ends 2, 3 and a passageway 4 extending between the ends 2, 3.

The body of the valve 1 comprises a hollow tubular housing 5. A hollow tubular piston 9 is disposed within the housing 5. The piston 9 is movable along a longitudinal axis of the housing 5 by an actuator 7 rotatably mounted on the outside of the housing 5 and coupled to the piston 9 via a cam mechanism comprising a cam 8 of the actuator 7 and a pair of cam followers 10 mounted on the exterior of the piston 9. The housing 5, the actuator 7 and the cam mechanism will be described in detail below.

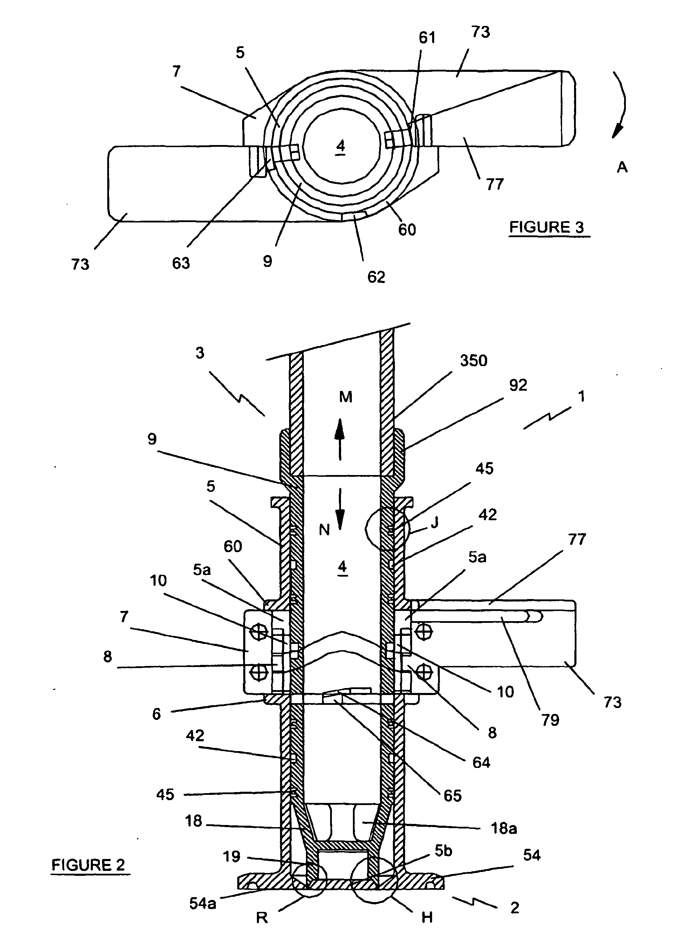

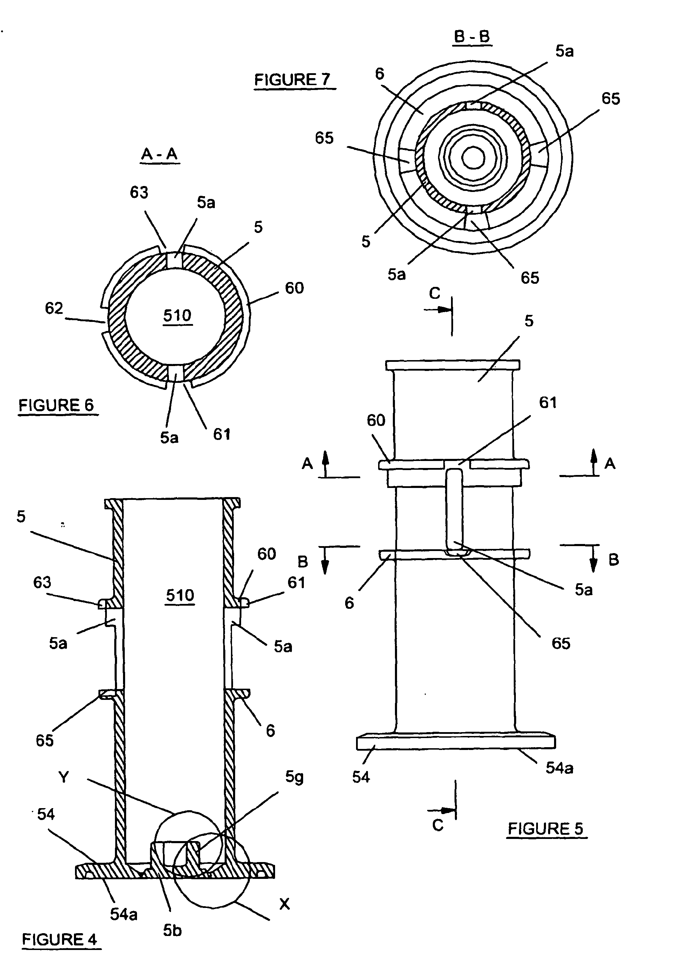

Referring to Figures 4 to 7 the housing 5 is provided by a hollow tube having an internal bore 510. First and second parallel spaced apart guide rails 6 and 60 respectively project laterally from the external surface of the housing 5. The first guide rail 6 faces the first end 2 of the valve and the second guide rail 60 faces the second end 3. The guide rails 6, 60 encircle the housing 5 in a plane normal to the longitudinal axis of the housing 5. The actuator 7 is mounted on the portion of the housing 5 defined between the guide rails 6, 60. A pair of diametrically opposing guide slots 5a for receiving the cam followers 10 (see Figure 2) of the cam mechanism are formed in the side wall of the housing 5 between the exterior and interior of the housing 5 and extends parallel to the longitudinal axis of the housing 5.

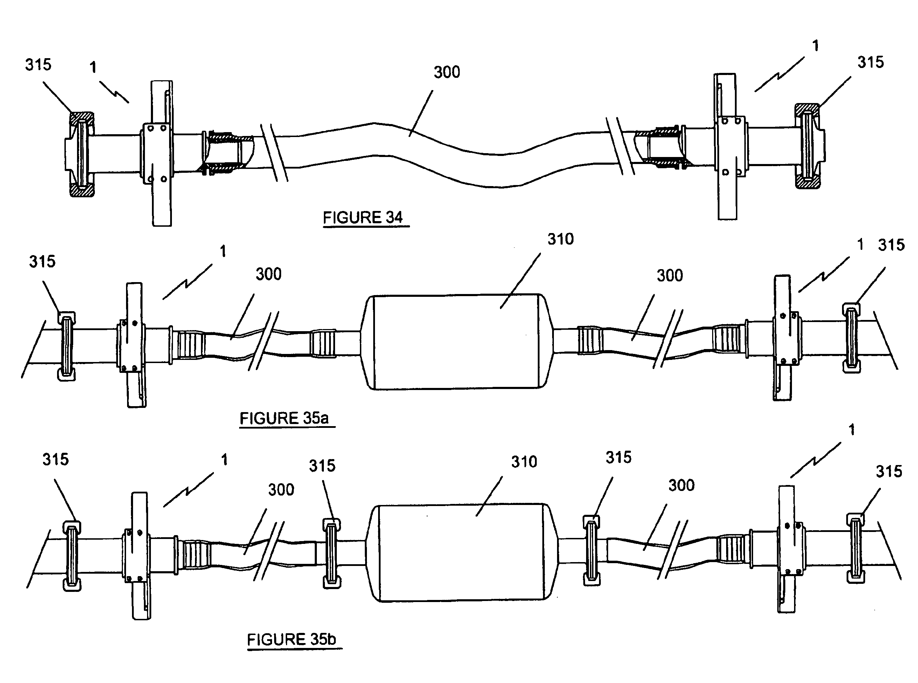

At the first end 2 of the valve 1, the housing 5 is connectable to a vessel (not shown) from which fluid is to be transferred through the valve 1. The housing 5 has a flange 54 at the second end 2 of the valve 1, and the base of the flange 54 comprises a mating surface 54a for mating in use with a corresponding mating surface of the vessel. A washer (not shown) may be placed between the mating faces of the valve and the vessel. A groove 54b may be provided in the mating surface 54a for receiving a washer. A matching groove may be formed in the mating surface of the vessel. The flanges of the valve and the vessel and as the case may be, the washer, may be secured together by a suitable fixing means such as a triclover clamp 315 (see Figure 34).

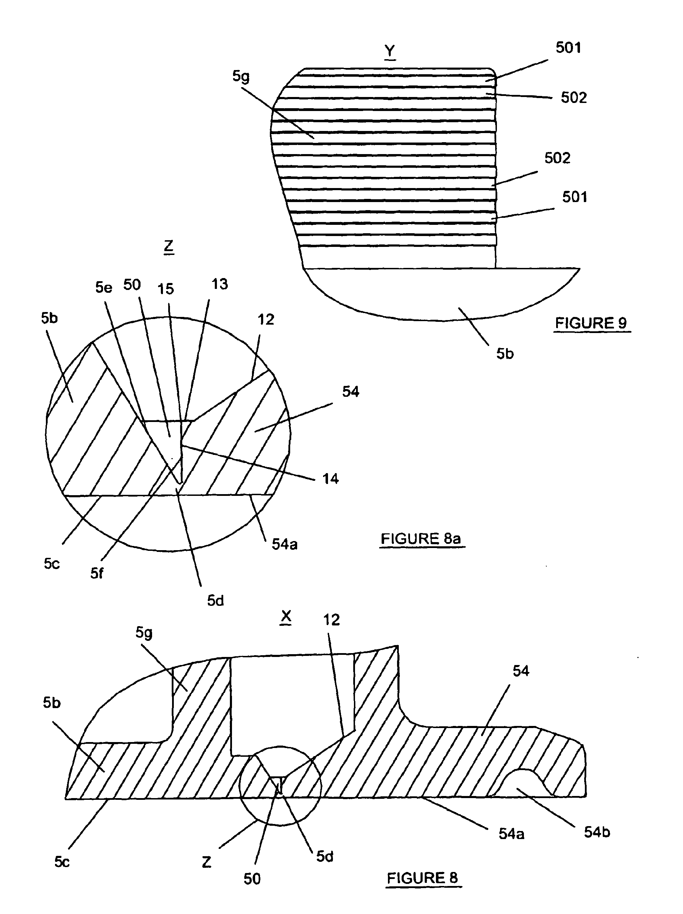

A seal 5b blocks the opening of the valve 1 at the first end 2. As shown in Figures 8 and 8a, the seal 5b is formed continuously with the flange 54 and has an outer surface 5c which, together with the mating surface 54a of the flange 54, forms a sterilisable external surface of the valve 1. In the present embodiment of the valve 1, the seal 5b is in a form of a disc. A junction region 5d encircles the seal 5b and connects the flange 54 and the seal 5b. The junction region 5d is formed by way of reduction of material thickness between the seal 5b and the flange 54 and has a uniform cross-section along its entire length. In the present case, the reduction of material thickness between the seal 5b and the flange 54 is made on internal sides of both the seal 5b and the flange 54, i.e. the sides which face the second open end 3 of the valve 1. Furthermore, the reduction in thickness is obtained by forming a notch 50 defined by surfaces 5e and 5f on the interior sides of the seal 5b and the flange 54, respectively. The surfaces 5e and 5f converge towards the opening of the second end 2 so that the junction region 5d includes the line of intersection of the converging surfaces 5e and 5f. The surface 5e is bevelled in relation to the longitudinal axis of the housing, whereas the surface 5f is substantially parallel to said longitudinal axis. Such a formation of the junction region 5d enables quicker and easier separation of the seal 5b from the flange 54. Also, the uniformity or the cross section of the junction region 5d and the presence of the fracture line reduce risk of the integrity of the valve being compromised during breakage of the junction region 5d. When the valve 1 is actuated, the seal 5b and the flange 54 separate at the junction region 5d to provide a fluid passageway through the valve 1. It will be appreciated that ways to obtain reduction of material thickness between the seal 5b and flange 54 may vary in other embodiments of the valve as long as the junction region includes a line of intersection of at least two converging surfaces of the seal and the flange.

The seal 5b has a wall or cylinder 5g projecting from the internal side of the seal 5b for fastening the seal 5b to the piston 9. As shown in Figure 9, the cylinder 5g has a series of alternating annular grooves 502 and ribs 501 around its outer cylindrical surface, the purpose of which will be described below. The cylinder 5g may be a hollow cylinder, as in the herein described embodiment of the valve, but is not limited to such a configuration.

Still referring to Figures 8 and 8a, the surface of the side wall which defines the internal bore 510 of the housing 5 comprises a first portion 12 near the opening of the first end 2 which converges towards the first end 2. The wall surface further comprises a second portion 13 proximal the second end 2 which is substantially perpendicular to the longitudinal axis of the housing 5. A third wall surface portion 14 extends from the second portion 13 towards the first open end 2 of the valve 1 and comprises the surface 5f of the flange 54 which is substantially parallel to the longitudinal axis of the housing 5. The boundary between the second portion 13 and the third portion 14 defines a sharp rim 15. It will be appreciated that angles of inclination of the wall portions 12, 13 and 14 in relation to the longitudinal axis of the housing 5 may vary in different embodiments of the valve, as long as there is provided an inwardly protruding sharp rim about the opening of the first end 2.

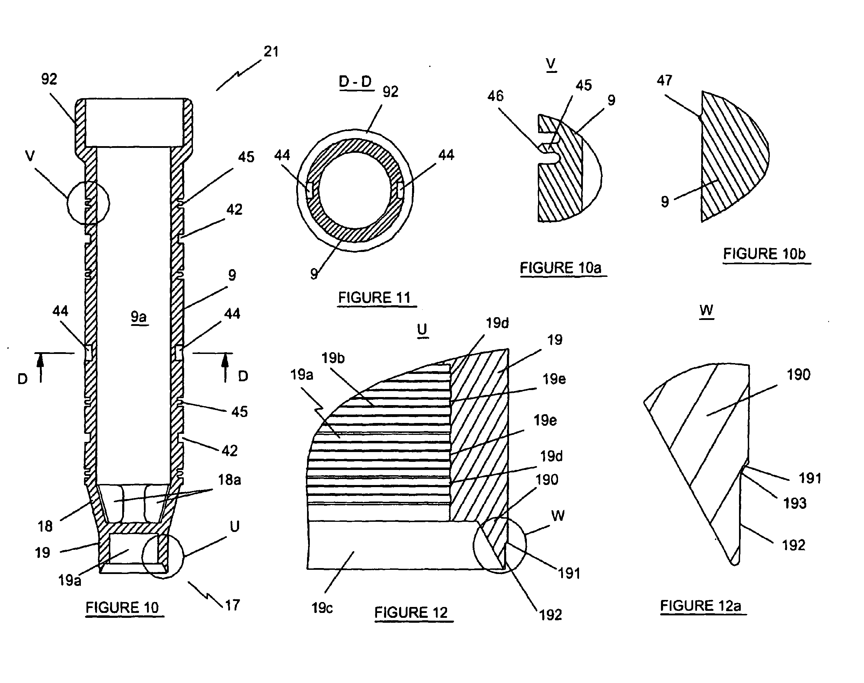

Referring to Figures 10 to 12a, the piston 9 has a first end 17 which in use is positioned proximal the first end 2 of the valve, a second end 21 proximal the second end 3 of the valve 1 and a bore 9a extending between the ends. The bore 9a constitutes a part of the fluid passageway 4 of the valve 1. The piston 9 has a funnel portion 18 at the first end 17 which in use converges towards the first end 2 of the valve 1. A skirt 19 extends axially from the narrow end of the funnel portion 18. The skirt 19 defines a cavity 19a with an opening facing the first end 2 of the valve 1 in use. The cavity 19a has a first section 19b proximal the base of the skirt 19 for receiving the cylinder 5g of the seal 5b and a second section 19c proximal the opening of the cavity 19a sized and shaped for receiving a body of the seal 5b. The interior surface of the cavity 19a defining the first section 19b has a series of alternating annular ribs 19d and grooves 19e which match the grooves 502 and the ribs 501 of the cylinder 5g. Materials of the cylinder 5 and the portion of the skirt 19 defining the first section 19b of the cavity 19a are selected such that the ribs 501 and 19e are resiliently deformable, e.g. plastics materials.

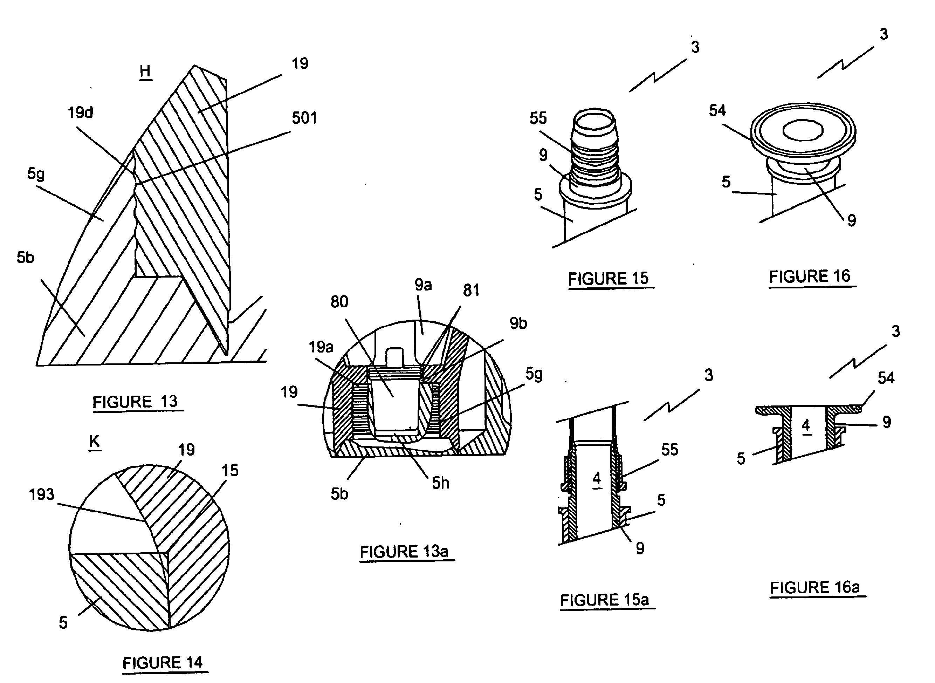

On assembly of the valve 1, when the piston 9 is inserted into the internal bore 510 of the housing 5, the cylinder 5g is received in the first section 19b of the skirt cavity 19a. As the cylinder 5g enters the first section 19b, the ribs 501 of the cylinder 5g and the ribs 19e of the first section 19b deform to enable advancement of the cylinder 5g towards the base of the skirt 19. When the free end of the cylinder 5g reaches the end of the cavity 19a, the ribs 501 of the cylinder 5g snap into the grooves 19e of the first section 19b. Likewise, the ribs 19d of the first section 19b snap into the grooves 502 of the cylinder 5g. In this position the seal 5b is locked together with the piston 9 (see Figure 13). Thus, the seal 5b is permitted to move only on displacement of the piston 9 to which it is connected.

It will be appreciated that other coupling means may be provided between the seal 5b and the piston 9 to enable displacement of the seal within the valve 1.

As shown in Figure 13a, the above described rib/groove arrangement between the seal 5b and the skirt 19 may be strengthened by interference-fitting a plug 80 into a corresponding recess 5h in the cylinder 5g. The interference-fit between the plug 80 and the cylinder 5g causes the cylinder 5g to expand laterally thus increasing contact forces between its exterior and the skirt 19. The plug 80 is inserted into the recess 5h via a through aperture 9b in the base of the skirt 19 connecting the cavity 19a and the inner bore 9a of the piston 9. Resiliently deformable ribs 81 encircle the portion of the plug 80 which seats in the aperture 9b to provide an efficient fluid-tight seal between the bore 9a and the cavity 19a.

The funnel portion 18 of the piston 9 has a plurality of through apertures 18a which enable access of fluid into the internal bore 9a of the piston 9 upon separation of the seal 5b from the flange 54.

The external surface of an end region 190 of the skirt 19 (see Figures 12 and 12a) has a step portion 191 where the external surface tapers towards the first end 2 of the valve 1. The step portion 191 leads to an end portion 192 which is substantially cylindrical. The end portion 192 is adjacent the open end of the cavity 19. A transitional curved surface area 193 is provided between the step portion 191 and the end portion 192 of the skirt 19. It will be appreciated that angles of inclination of the surfaces of the step potion 191 and the end portion 192 may vary in different embodiments of the valve so long as there is provided a transitional curved surface area therebetween. The purpose of the curved surface area 193 is for engaging the sharp rim 15 of the internal bore 510 of the housing 5 and will be described below. Materials of the region of the housing 5 containing the sharp rim 15 and the end region 190 of the skirt 19 are selected such that the sharp rim 15 and the curved surface area 193 are plastically deformable, e.g. plastics materials. The end region 190 is sized and shaped to occupy the notch 50 in an assembled ready to use state of the valve 1 (see Figure 2).

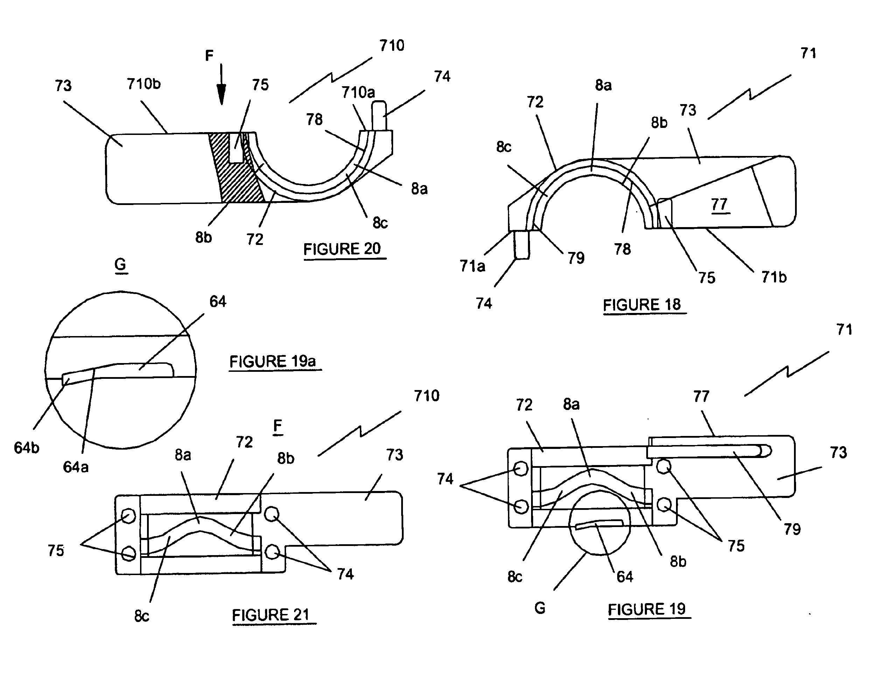

The cam 8 is provided in a form of a continuous bent ledge which projects from the inner surface of actuator 7 (see Figure 2). The cam 8 has a pair of first cam slopes 8b which alternate with a pair of second cam slopes 8c (see Figures 18 to 20). During relative travel of the cam followers 10 along the first cam slopes 8b on rotation of the actuator 7. the cam followers 10 ascend the first cam slopes 8b, and the piston 9 is displaced and moved away from the first end 2 of the valve 1 in the direction of the arrow M in Figure 2, i.e. towards the second end 3 of the valve. Thus the seal 5b, which is locked to the piston 9, will be tom off the housing 5 along the junction region 5d until it separates from the flange 54 and withdrawn into the body of the valve 1 with the piston 9.

In order to enable the breakage of the junction region 5d, resistance of the ribs 501 and 19e of the cylinder 5g and the skirt 19, respectively to the displacement force of the piston 9 must be greater then the resistance of the fracture line 5d to said force. Upon rupture of the junction region 5d between the seal 5b and the housing 5 fluid can flow from a vessel connected to the first end 2 of the valve 1 into the internal bore 9a of the piston 9 through the apertures 18a of the funnel portion 18. The fluid exits the valve 1 at the second end 3 and enters a downstream processing manifold.

In many applications, this valve will be used as a single-use valve which is discarded after completion of the fluid transfer. However, the valve 1 is also operable to be re-closed after the seal 5b has been broken away. Re-closure may be required when, for example, after actuation of the valve a leak occurs in the system, or in any other hazardous circumstances or where intermittent operation of the process is required. Another circumstance in which it is desirable to be able to close the valve is where potentially hazardous materials, such as biological materials, are transferred, and it is desirable to close the valve prior to discarding it, to ensure that any hazardous materials within it may not contaminate the outside environment during disposal.

For re-closure, there are provided the second cam slopes 8c. Further rotation of the actuator 7 in the same direction after the junction region 5d has been ruptured and the seal 5b has been withdrawn into the body of the valve 1 causes the cam followers 10 descend the cam slopes 8c, and the piston 9 is thus displaced towards the first end 2 of the valve 1 in the direction of arrow N in Figure 2. The rib/groove engagement between the seal 5b and the skirt 19 of the piston 9 provides a firm grip enables the seal 5b to be displaced in both directions along the longitudinal axis of the valve 1. As the piston 9 travels towards the opening of the first end 2, the sharp rim 15 of the internal bore 510 of the housing 5 engages the curved surface area 193 of the end region 190 and displaces a portion of the curved surface area 193 in the direction of its travel thus deforming the materials of the sharp rim 15 and the curved surface area 193. The end region 190 occupies the opening of the flange 54 and the end region 192 abuts the third portion 14 of the flange 54. The contact between the sharp rim 15 and the curved surface area 193 is sufficiently close and tight to form a seal therebetween which prevents any further flow of fluid to or from the body of the valve 1. The linear, non-rotational motion of the piston 9 ensures that no tangential stretching of the material of the sharp rim 15 and the curved surface area 193 occurs which could potentially compromise the seal therebetween.

The inner surface of the cavity 19a must not have any apertures leading to the interior of the valve and/or the contact of the exterior of the seal 5b with the wall of the cavity 19a must be fluid-tight to prevent any fluid bypassing the second seal formed between the sharp rim 15 and the curved surface area 193. The seal 5b and the cavity wall can be sealed together by, for example, providing an endless deformable rib (not shown) projecting from the inner surface of the seal 5b which collapses against the cavity wall upon engagement of the seal 5b with the piston 9.

The seal formed between the sharp rim 15 and the curved surface area 193 is suitable to withstand the rigours of the sterilisation process required in this field. It is essential that no deformation of the materials forming the seal occurs during sterilisation, otherwise the integrity of the seal would be compromised.

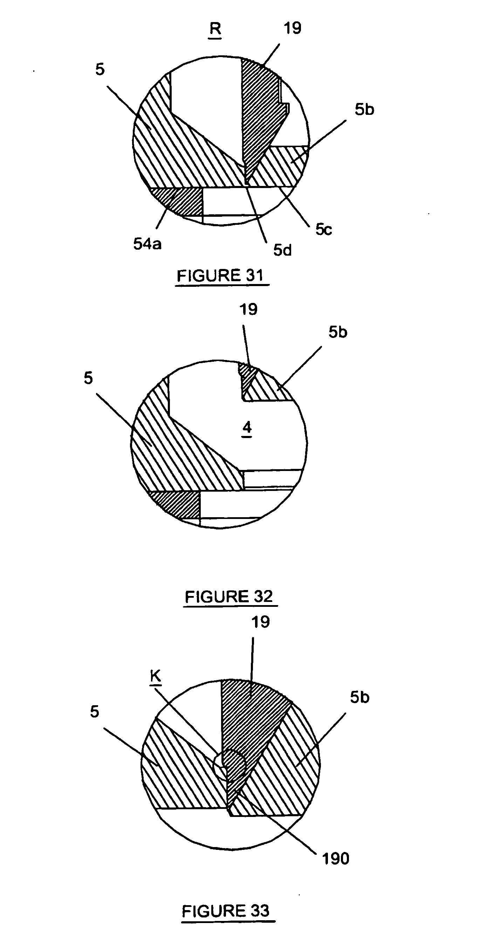

The second cam slope 8c is so shaped that during re-closure, the piston 9 travels towards the opening of the first end 2 of the valve 1 a distance which is greater than the distance travelled by the piston during separation of the seal 5b from the housing 5 so that the free edge of the end region 190 of the skirt 19 projects outwardly from the opening of the first end 2 of the valve 1 upon re-closure (see Figure 33). This is to enable engagement of the sharp rim 15 with the curved surface area 193 which are axially spaced apart in a ready to use state of the valve 1 when the junction region 5d is intact.

In one application, the valve may only be re-closed once. After re-closure the valve can be disconnected and discarded.

In another application, the re-closed valve can be re-opened by further rotation of the actuator 7 about the housing 5 in the same direction as previous actuations. Such a rotation causes the cam followers 10 to ride over the first cam slopes 8b to move the piston 9 away from the opening of the first end 2 until the sharp rim 15 and the curved surface area 193 disengage thus opening the seal. In order to re-close the valve 1 after it has been re-opened, it is necessary to rotate the actuator 7 further so that the cam followers 10 ride over the second cam slopes 8c until the piston 9 moves into the position in which the sharp rim 15 and the curved surface area 193 are engaged. Thus, multiple actuations of the valve are possible, and in the case of each re-closure, an effective, reliable seal is reformed between the valve and any apparatus to which it is connected.

As shown in Figure 10, the piston 9 has a sleeve coupling 92 at the second end 21 for coupling with an end 350 (see Figure 2) of tubing leading to a downstream processing location. Typically, the end 350 of the tubing is welded to the sleeve coupling 92 to create a fluid tight seal between the tubing and the sleeve coupling 92. The tubing may be welded beforehand and supplied with the valve 1.

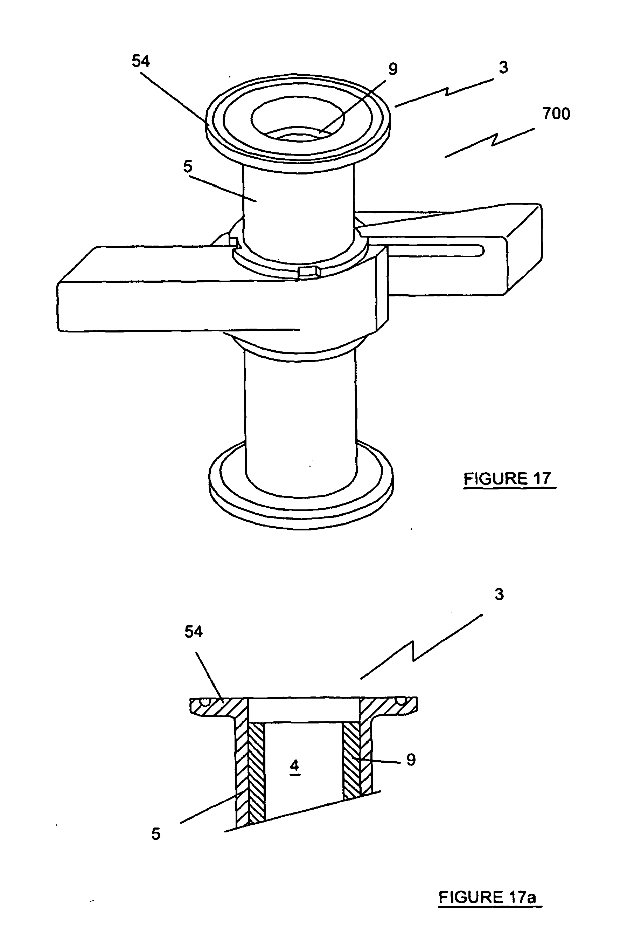

Figures 15 to 17a show alternative couplings which may be provided at the second end 3 of the valve 1 for downstream connection of the valve 1. Figures 15 and 15a show a barbed fitting 55 extending from the second end 21 of the piston 9 instead of the sleeve coupling 92. The barbed fitting 55 is suitable for connection to various tubes having a range of diameters. Figures 16 and 16a show a flange 54 provided at the second end 21 of the piston 9 which is the same as the flange of the housing 5 and is suitable for mating with a mating surface of a downstream coupling device. Figures 17 and 17a show a fixed length valve 700, which is identical to the valve 1 except that the housing 5 has a flange 54 identical to the flange of the same number at the first end 2 of the valve 1 by means of which the housing 5 is connected to the downstream processing location. The travel of the piston 9 occurs within the housing 5.

As shown in Figures 10 and 10a, a plurality of axially spaced-apart seal members is provided in a form of deformable substantially V-shaped in cross-section ribs 45 formed around the external surface of the piston 9. The external diameter of the piston 9 is smaller than the diameter of the internal bore 510 of the housing 5 whereas the most peripheral region 46 of the surface of each rib 45 projects beyond the external surface of the piston 9 so that the diameter of the most peripheral region 9 is greater than the diameter of the internal bore 510. The portions of the piston 9 containing the ribs 45 are made from a resiliently deformable material, e.g. plastics material and the ribs 45 are formed integrally with the piston 9.

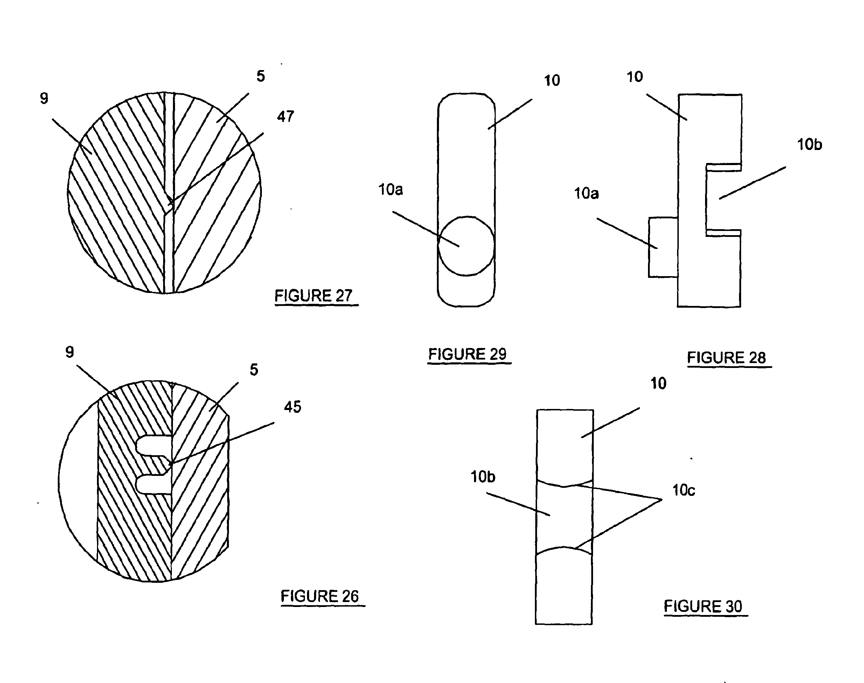

In use, when the piston 9 is loaded into the internal bore 510, the most peripheral region 46 of the rib 45 abuts the wall of the internal bore 510 and deforms in order to permit the piston 9 to enter the bore 510. The abutment is sufficiently close and tight that a seal is formed between the wall and the rib 45 to prevent fluid from flowing between the external surface of the piston 9 and the interior of the housing 5. This seal remains intact during subsequent movements of the piston 9 along the internal bore 510 as the deformable rib 45 drags or "wipes" along the wall of the internal bore 510 (see Figure 26). As an addition to the ribs 45, an O-ring seal may be placed in one of the two slots 42 formed in the external surface of the piston 9 one at each end of the piston. A modified V-shaped rib 47 (Figures 10b and 27) can be used instead of the ribs 45.

A pair of diametrically opposing bores 44 are disposed intermediate the ends 17, 21 of the piston 9. These bores 44 are formed for engagement with spigots 10a extending from the cam followers 10 (see Figures 28 and 29).

As shown in Figure 2, the cam 8 is provided in a form of a ledge of substantially rectangular cross-section projecting proud from the inner surface the actuator 7, i.e. the surface adjacent the housing 5 in use. The cam followers 10 are mounted at diametrically opposing locations on the exterior of the piston 9 by interference-fitting spigots 10a of the cam followers 10 into the bores 44 of the piston 9. The cam followers 10 project proud from the exterior of the piston 9 and extend through the opposing guide slots 5a of the housing 5. Each cam follower 10 has a slot 10b (see Figures 28 and 30) formed in an outwardly facing face of the cam follower for receiving the cam 8. Rotation of the actuator 7 about the housing 5 causes the cam 8 to push the cam followers 10 along the guide slots 5a, thus causing the piston 9 to translate linearly about the longitudinal axis of the housing 5 thus displacing the seal 5b. The guide slots 5a also prevent the piston from moving in a side deflection from the linear path during its travel along the longitudinal axis of the housing 5. The linear non-rotational motion of the piston 9 without any side deflection from the straight path provides even load distribution on the junction region 5d during separation of the seal 5b from the flange 54 which increases reliability and safety of valve actuation. Furthermore, such a motion of the piston 9 reduces the risk of compromising the integrity of the valve 1.

As shown in Figures 18 to 21, the actuator 7 comprises two component halves 71 and 710, each of which comprises a C-shaped collar 72 having respective pairs of coupling faces 71a, 71 b and 710a, 710b. A handle 73 extends laterally from the outer surface of each C-shaped collar 72. In the present embodiment the handles 73 of the component halves 71 and 710 include the coupling faces 71b, 710b, respectively. A pair of connecting pins 74 extend from one of the coupling faces of the C-shaped collar 72 of each component half 71, 710, for example the coupling surfaces 71a, 710a, respectively. The other coupling surface of each component half 71, 710, i.e. the coupling surfaces 71b, 710b, respectively have a matching pair of bores 75 for receiving the connecting pins 74 of the other component half. Aligning the connecting pins 74 of one of the component halves 71, 710 with the bores 75 of the other components half and pressing the two component halves 71, 710 together results in the actuator 7 shown in Figure 2 in which a central tubular bore (not shown) is defined by the collars 72 of the component halves 71, 710.

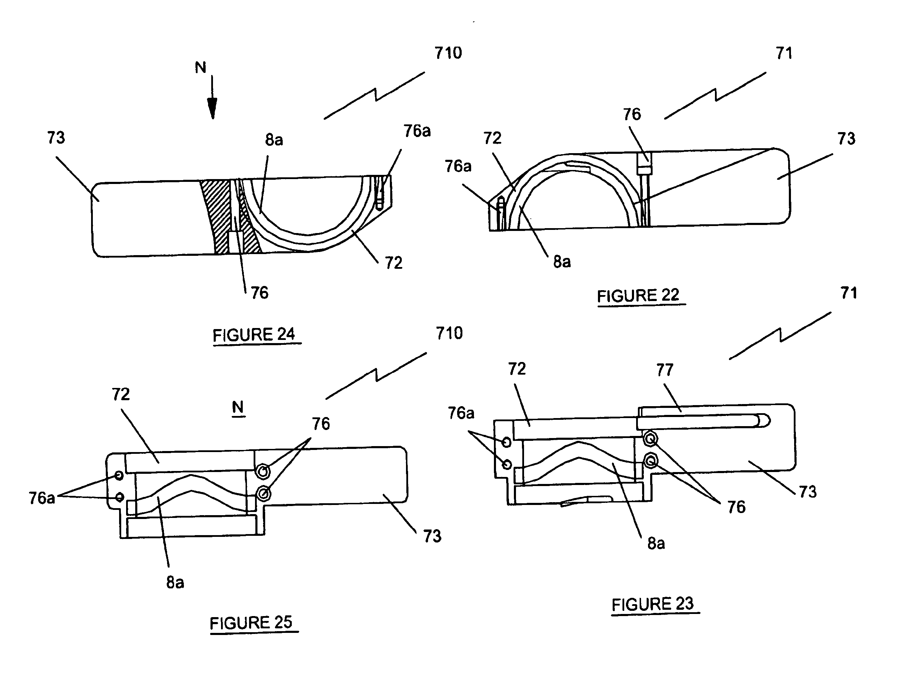

When assembling the valve 1, the two component halves 71, 710 are located around the housing 5 between the two guide rails 6, 60 and pressed together until the connecting pins 74 occupy the bores 75. Internal curved surfaces 78 of the C-shaped collars 72 of each component half 71, 710 has a cam half 8a protruding therefrom. Each of the cam halves 8a has the first and second cam slopes 8b and 8c. When the component halves 71, 710 are assembled and pressed together, the cam halves 8a form the cam 8 which continuously encircles the inner surface of the actuator 7. The components halves 71, 710 can be fastened together using various means, for example, screws threaded into corresponding apertures 76, 76a provided in the components halves 71, 710, as shown in Figures 22 to 25.

Provision of only one cam half 8a on the inner surface of the actuator 7 is sufficient for the arrangement where only one re-closure of the valve is desired, the valve being in a locked-closed state after re-closure.

As shown in Figure 30, the slot 10b of each cam follower 10 comprises a pair of opposing convex walls 10c, the shape of which enables point contact between the walls and the cam 8 rather than surface contact thus reducing friction between the cam 8 and the cam followers 10.

Referring to Figure 1, 4 to 7 and 18 to 21, a locking mechanism is provided between the actuator 7 and the housing 5 to prevent accidental or spontaneous rotation of the actuator 7. The locking mechanism comprises a tongue 77 formed integrally with or attached to the peripheral end of the handle 73 of one of the component halves 71, 710, for example the component half 71 at one end of the tongue 77. The tongue 77 extends inwardly from the peripheral end of the handle 73. The other end of the tongue 77 is a free end and is engaged with a first recess 61 formed in the guide rail 60 of the housing 5 (see Figure 2) in an assembled ready to use state of the valve 1, thereby preventing rotation of the actuator 7 about the housing 5. A gap 79 is defined between the tongue 77 and the handle 73 to permit resilient flexing of the tongue 77. In order to release the tongue 77, an external pressure such as a thumb force is applied to tongue 77 to depress it, thereby disengaging the tongue 77 from the first recess 61. The actuator 5 is then free to rotate.

In use, in order to open the valve 1 from a supplied ready-to-open state (see Figures 1 and 2), the tongue 77 is released as described above and the actuator 7 is rotated in the direction of arrow A (see Figure 3 and 31) to a predetermined angle by the handle 73. During the rotation, the first cam slopes 8b push the cam followers 10 in the guide slots 5a towards the second end 3 of the valve 1 thus linearly displacing the piston 9 along the longitudinal axis of the housing. The piston 9 ruptures the junction region 5d and withdraws the seal 5b into the body of the valve1 (Figure 32). During rotation of the actuator 7, no external pressure is applied to the tongue 77 as the free end of the tongue 77 passes under the guide rail 6. A second recess 62 (Figure 2) is provided in the guide rail 6, and the tongue 77 resiliently snaps into the second recess 62 when the actuator 7 reaches a position in which the seal 5b is fully withdrawn into the body of the valve 1 and the valve 1 is open for passage of fluid. In order to re-close the valve 1, the tongue 77 is released from the recess 62 and the actuator 7 is rotated further around the housing 5 to a second predetermined angle while the cam followers 10 travel on the second cam slopes 8c towards the first end 2 of the valve 1 thus displacing the piston 9 so that the sharp rim 15 engages the curved surface area 193, as described above, to re-close and re-seal the valve 1 (see Figure 33). A third recess 63 (Figure 3) is provided in the guide rail 6, and the tongue 77 resiliently snaps into the third recess 63 upon re-sealing of the valve 1.

In a modification of the valve in which the valve can only be re-closed once, a second non-releasable lock (not shown) may be built into the valve for preventing any further rotation of the actuator in any direction upon re-closing the valve.

In a modification in which multiple actuations are possible, in order to re-open the valve, the tongue 77 is released from the third recess 63 and the actuator is rotated further about the housing 5. In the presently described arrangement of the valve 1, the rotation of the actuator continues until the tongue 77 firstly passes the first recess 61 and then snaps into the second recess 62. This is the "valve open" position in which the seal 5b in withdrawn into the body of the valve 1 and the sharp rim 15 is disengaged from the curved surface area 193.

A fourth recess (not shown) may be provided in the guide rail 60 diametrically opposite the second recess 62. The tongue 77 thus could snap into the fourth recess on its travel from the third recess 63. In this position, the sharp rim 15 and the curved surface area 193 are disengaged and the seal 5b is withdrawn into the body of the valve 1, just as if the tongue 77 were engaged with the second recess 62. Consequently, this position defines a further "valve open" state".

A third releasable lock may be provided in this modification for manually locking the actuator upon re-closing the valve. Such a releasable lock can be released to enable further actuations, if required.

A resiliently deformable snap-fit stop member 64 (see Figure 19) is provided on the inner side of the actuator 7, either formed integrally with or attached to the inner side. The stop member 64 prevents reverse rotation of the actuator 7. The stop member 64 projects outwardly from the central bore beyond the rim defining the opening of the actuator 7 which in use faces the first end 2 of the valve 1. Three circumferentially spaced apart pockets 65 (one shown in Figure 1) are formed in the first guide rail 6 so that the stop member 64 snaps into one of the pockets 65 when the tongue 77 occupies respective recesses 61, 62 or 63. The stop member 64 has a sloping side 64a (Figure 19a) and a free end 64b. When the actuator 7 is rotated in the correct direction around the housing 5, the sloping side 64a slides against the guide rail 6 thus deflecting the stop-member 64 so that the sloping side is substantially parallel to the rim of the actuator 7 thus allowing the stop member 64 exit a pocket 65. On the other hand, if rotation of the actuator 7 is attempted in the wrong direction, the free end 64b abuts a side wall of a pocket 65 thus preventing rotation of the actuator 7 in that direction. In the modification where the fourth recess is provided for the tongue 77, a respective fourth pocket 65 may be formed in the first guide rail 6.

Provision of only one handle 73 for rotating the actuator 7 about the housing 7 having a locking mechanism is possible for any valve modification.

One example of how the valve of the invention may be used in practice will now be described with reference to Figure 34. In this example, a first vessel is to be connected to a second vessel by means of a tube 300. The tube 300 is provided with a valve 1 at each of its ends. The tube 300 with the valves 1 attached at either end is placed in a bag and the contents of the bag is sterilised, for example by steam, gas, radiation or any other suitable means. In a further step, the bag is opened and one of the valves 1 is removed, thereby exposing the external sealing surface of the valve to environmental contamination whilst the other valve may remain in the bag, although it will inevitably become exposed on opening of the bag. Once released from the bag, valve 1 is coupled to the first vessel and the first vessel is then steam sterilised, thereby also resterilising the exposed face of the valve 1. Next, the first vessel with the attached valve 1 and the bag containing the remaining part of the tube 300 and the other valve is transferred to the site of the second vessel. There, the valve 1 on the opposite end of the tube 300 is released from the bag and connected to the second vessel in the same manner as described in relation to the first valve and the first vessel. The second vessel and the attached valve are then steam sterilised. Now, both valves may be opened providing a sterile fluid path between the first and second vessels. On completion of fluid transfer, the valves are re-sealed and the interiors of the vessels together with the faces of the valves facing those interiors are sanitised and the valves are disconnected from the vessels. The valves are then discarded. If required, it is possible to re-close and re-open the valves during the fluid transfer.

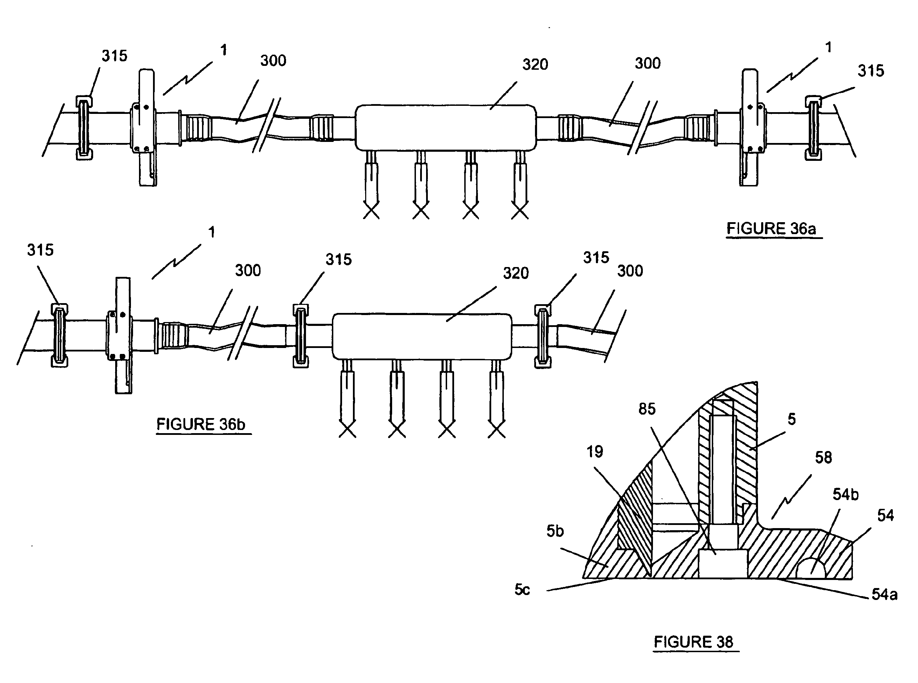

As shown in Figures 35a to 36b, the tubing which connects the two valves may include a filter 310 and/or a coupler 320 leading to a test sample manifold. Triclover clamps 315 may be used for connecting the filter 310 and the coupler 320 to the tubing (Figures 35b and 36b).

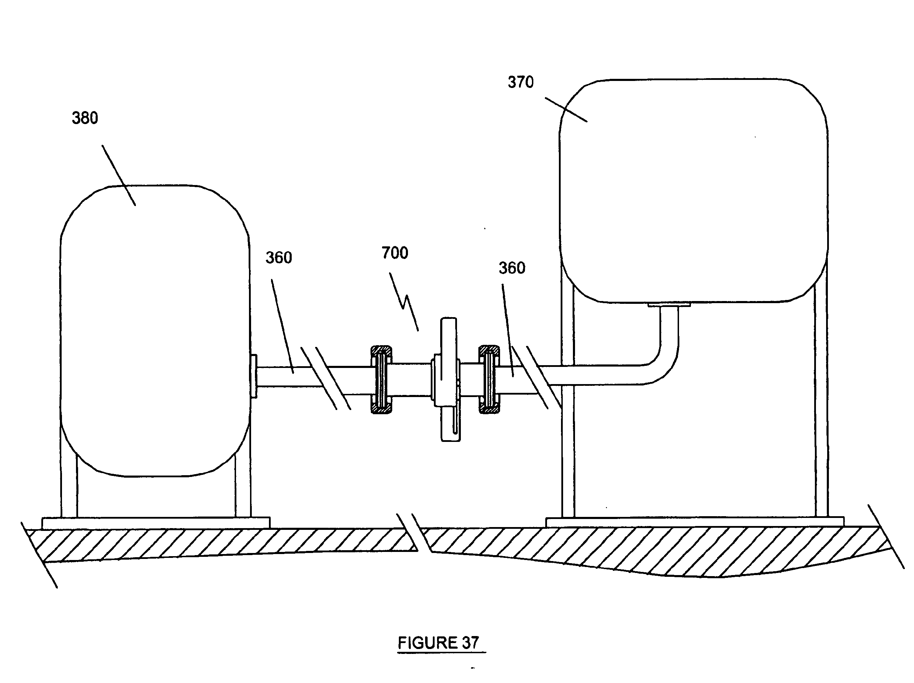

Figure 37 shows a fixed length valve 700 coupled at both ends with rigid pipes 360 which connect vessels 370 and 380.

For operation of the valve of the invention, the valve is pre-sterilised, for example by gas, gamma ray or steam sterilisation, prior to use. At this stage, it is in its closed position. Once sterilised, the valve can be connected to any desired opening of a pipe or vessel. In connecting the valve to the opening, the external surfaces of the valve, including the exterior sealed entry side of the valve, are exposed to the atmosphere, thus sterility of the valve is compromised. Once the valve is connected, the vessel or pipe to which it is attached is sterilised, enabling the external connecting surface of the valve to be resterilised. Once the connecting surface of the valve has been resterilised the valve can be opened when required.

In another embodiment not shown in the drawings, the valve according to the invention may be activated by a sliding actuator. Such a sliding actuator has a pair of opposing parallel side walls each wall having a cam in a form of a ledge projecting inwardly from the wall inner surface and extending along the wall. The actuator is mounted on the housing between a pair of guide rails provided on the exterior of the housing so that the housing is received between the opposing walls and the actuator can be moved laterally perpendicular to the longitudinal axis of the housing. The cams of the actuator are engaged with cam followers similar to those described for the rotary actuator 7 so that sliding motion of the actuator in relation to the housing results in linear longitudinal motion of the piston within the housing.

In yet another embodiment (see Figure 38), a portion of the flange 54 surrounding the seal blocking the open end 2 of the valve may be provided as an attachment 58 which includes the seal 5b and the flange 24. The attachment 58 is secured to the housing 5 at the first end 2 of the valve 1 and fixed in place by screws 85. The housing 5 and the attachment 58 are so configured that the contact between the housing and the attachment 58 is fluid-tight. After each use the attachment 58 is removed and the valve is cleaned. A new attachment 58 with an unbroken seal 5b is then placed into the position blocking the open end 2 of the valve 1.

In another modification (not shown) an attachment may be formed and shaped to provide a secondary function of acting as a sealing washer between the valve and vessel to which it is coupled when the valve and vessel are secured together. A seal such as the seal 5b is formed integrally with the washer, and when the washer is placed between the vessel and the valve, the seal blocks the open end of the valve. The seal of the washer is coupled with the piston of the valve so that on movement of the piston within the valve the seal is separated from the washer to open the valve. In valve arrangements where an attachable seal is used, the housing of the valve can be made from hard materials such as stainless steel or ceramics which can withstand multiple sterilisations.

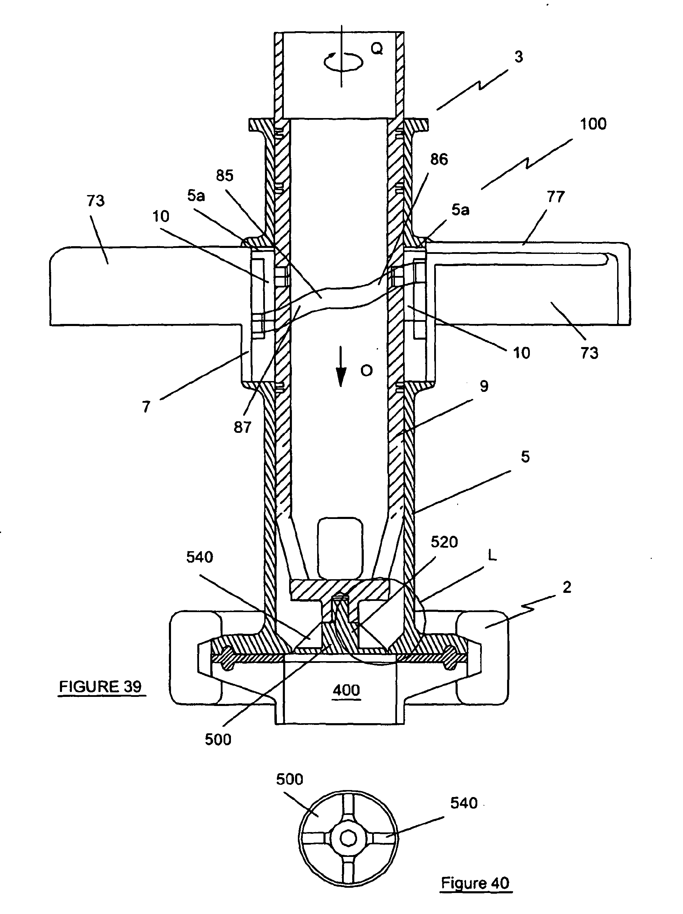

Figures 39 to 40 show a further embodiment of the valve in accordance with the invention and the valve is indicated generally by reference numeral 100. Elements of the valve 100 which are the same as the elements of the valve 1 are indicated by the same numerals in the valve 100. A seal 500 blocks the opening of the valve 100 at the first end 2 thereof. The seal 500 is similar to the seal 5b but has reinforcing ribs 540 extending between the inner face of the seal 500 and an upstanding portion 520 on the inner face. In Figures 39 to 43, coupling between the upstanding portion 520 and the piston 9 is illustrated only schematically. In fact, the seal 500 and the piston 9 are coupled together via a rib/groove arrangement similar to that of the valve 1 with or without a plug 80. The valve 100 differs from the valve 1 in that the cam mechanism between the actuator 7, the housing 5 and the piston 9 is arranged to displace the seal 500 outwardly into a passageway of a separate vessel to which the valve 100 is connected at its first end 2 i.e. in the direction of arrow O in Figure 39 instead of withdrawing it into the interior of the valve 100. Subsequent re-closure of the valve 100 is carried out by pushing the piston 9 further out of the housing 5 in the same direction as during the displacement of the seal 500 in order to engage the sharp rim 15 and the curved surface area 193 as described above.

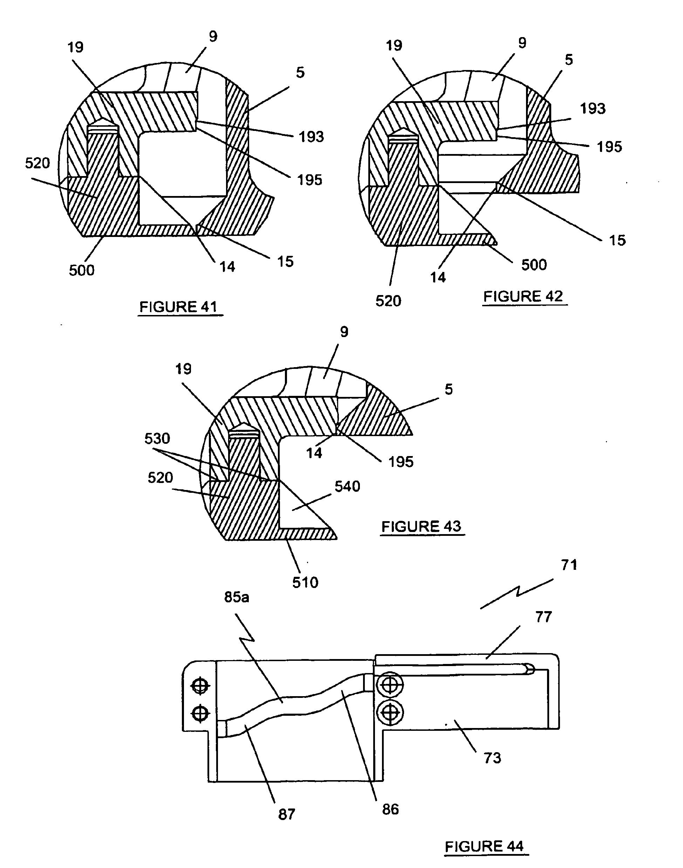

A continuous cam 85 encircles the inner surface of the actuator 7. The cam 85 is assembled from two cam halves 85a (Figure 44). Each cam half 85a extends diagonally across the inner surface of its respective component half of the actuator 7 (Figure 40 shows the component half 71 which has the tongue 77) and has a first step portion 86 and a second step portion 87.

In use, in order to open the valve 100 from a supplied ready-to-open state (Figures 39 and 41), the tongue 77 is released as described above and the actuator 7 is rotated in the direction of arrow Q in Figure 40 to a predetermined angle by the handle 73. During the rotation, the first step portions 86 push the cam followers 10 in the guide slots 5a towards the first end 2 of the valve 100 thus linearly displacing the piston 9 along the longitudinal axis of the housing 5. The piston 9 ruptures the junction region 5d (Figure 41) and stamps the seal 5b into a passageway 400 of a separate vessel (Figures 39 and 42). In order to re-close the valve 100, the actuator 7 is rotated further around the housing 5 to a second predetermined angle while the second step portions 87 push the cam followers 10 further outwardly thus displacing the piston 9 so that the sharp rim 15 engages the curved surface area 193, as described above, to re-close and re-seal the valve 100 (see Figure 43).

The wall surface portion 14 of the housing 5 and a surface portion 195 of the skirt 19 are substantially parallel and when the sharp rim 15 engages the curved surface area 193, the skirt 19 occupies the opening of the first end 2 of the housing 5 and the surface portion 195 abuts the wall surface portion 14 (Figure 43).

During rupture of the junction region 5d, the displacement force of the piston is concentrated on shoulders 530 of the seal. Therefore the rib/groove arrangement is subjected to a lesser load than the same rib/groove arrangement in the above described valve 1 where the seal 5b is withdrawn into the valve body. The reinforcing ribs 540 help to reduce the risk of damaging the seal 500 during the rupture.

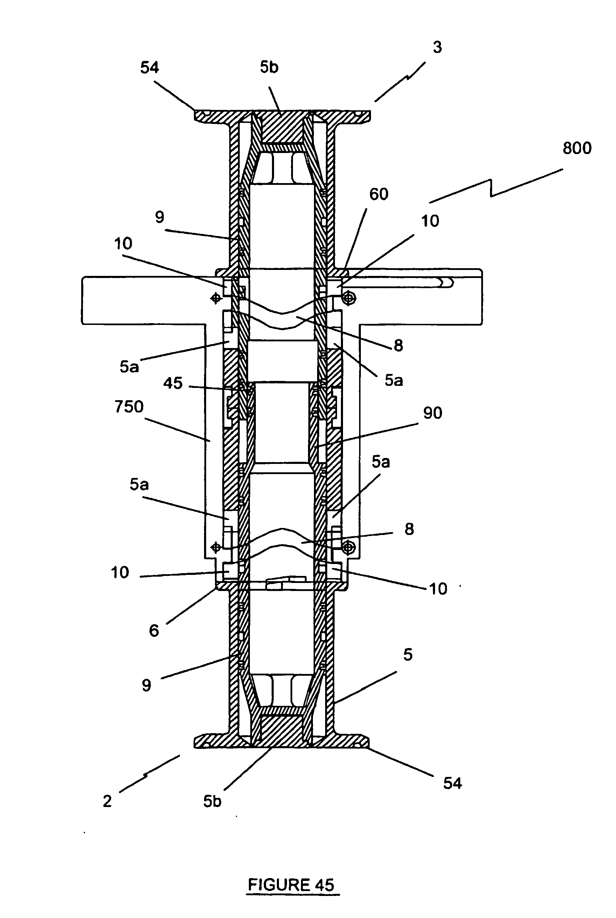

Figure 45 shows a further embodiment of a valve in accordance with the invention indicated generally by reference numeral 800. Elements of the valve 800 which are the same as the elements of the valve 1 are indicated by the same numerals. Valve 800 is a "double-ended" valve, being provided at each of its ends with the seals described above in relation to the valve 1. A flange 54 is formed at each of the first end 2 and the second end 3 of the valve 800. The valve 800 has a pair of first seals 5b closing the openings of the flanges 54 at the first and second ends 2, 3 of the valve in a ready to use state of the valve. Each seal 5b is connected to one of a pair of pistons 9 axially spaced apart within the common housing 5 via an above described rib/groove arrangement. Both pistons 9 have curved surface areas and the flanges have sharp rims like those described above with reference to the valve 1. A common actuator 750 is mounted about the housing 5 between the guide rails 6 and 60. Actuator 570 is similar to the actuator 7 of valve 1 but has a pair of cams 8 formed on its inner surface, the cams 8 being axially spaced apart from each other. Each cam 8 is engaged with a pair of cam followers 10 of one of the pistons 9. The cam followers 10 are movable in their respective guide slots 5a of the housing 5. Rotation of the common actuator 750 in a first actuation causes the cam followers 10 to travel on the cams 8 and move the pistons 9 inwardly from the openings of the flanges 54 thus rupturing the seals 5b and withdrawing them into the housing 5 and opening both ends 2 and 3 of the valve for passage of fluid. Further rotation of the actuator 750 about the housing 5 in a second subsequent actuation causes the pistons 9 to move in a reverse direction towards the ends 2 and 3 thus engaging the sharp rims and the curved surface areas in the manner described above with reference to the valve 1, thereby re-sealing the valve 800. One of the pistons 9 has a tubular extension member 90 at its inwardly facing end. The extension member 90 is slidably engaged with the other piston 9 and in use directs the fluid which flows between the ends 2 and 3. Seals 45 are formed on the extension member 90 to seal between the extension member and the inner surface of the other piston 9 in the same manner as described above with reference to the valve 1. If desired, the valve 800 can be re-opened and re-closed again as many times as required.

It will be appreciated that a valve such as the valve 800 can be modified to have outwardly stamped seals such the seals 500 of the valve 700. It will further be appreciated that a "double-ended" valve may be alternatively provided by taking two valves such as the valve 1 and assembling then together at their respective ends by a suitable coupling means or clamp. Such a valve would have an actuator for each of the individual valves of the assembly so that each end of the assembled double-ended valve could be actuated independently of the other.

The seals 5b and 500 are formed from an appropriate plastics material such as polypropylene and may be coated with a non-stick material such as Teflon™. The material of the seal 5b is not limited to plastics materials and any suitable material known to a person skilled in the art can be used. Ideally the material selected will have received approval for use in the pharmaceutical or biotechnological industries from an appropriate regulatory authority. Plastics, rubber, metal, foil and other seals, whether flexible and/or stretchable or not, are all contemplated to be useful within the scope of the invention.

It will also be appreciated that the above-described cam mechanism is not limited to the configuration comprising a cam formed on the inner surface of the actuator and cam followers engaged with the valve piston. Indeed, many modifications of the cam mechanism are possible as long as it provides linear non-rotational motion of the piston along its own longitudinal axis and the longitudinal axis of the housing. One possible modification may include provision of a curved cam slot formed in the actuator wall and cam followers either formed integrally with the piston or fastened to the outer surface thereof, the cam followers being received in the slot to enable linear translation of the piston in the housing. Other possible ways, not limited to cam pairs, exist for coupling the actuator, the housing and the piston to enable linear longitudinal motion of the piston inside the housing. As described above, the two seal types of the valve, namely the tearable seal 5b and the "contact" seal, are described as being actuated by the same cam mechanism, but it will be understood that the actuation of the different seals may be decoupled.

The valve or any of its parts may be fabricated from any suitable material including heat resistant plastics materials and metals or ceramics. Plastics are particularly preferred for the single use valve.

It will of course be understood that the invention is not limited to the specific details as herein described, which are given by way of example only, and that various alterations and modifications may be made without departing from the scope of the invention as defined in the appended claims.

## Claims

1. A valve (1, 100, 700, 800) comprising a body (5) having first and second open ends (2, 3) and a passageway (4) for fluid between the ends, the first end (2) including a coupling means (54) for sealingly connecting the body about an opening of an external device and a first seal (5B) formed with the coupling means (54) closing the open area of the first end (2), which in use is placeable in register with the opening of the external device, the valve further including a seal displacement means (9) movable within the body (5) so as to displace the first seal (5B) permitting fluid to pass along the passageway (4) between the ends (2, 3), the coupling means (54) and the first seal (5b) presenting an external sterilisable mating surface (5a) for sealingly mating with a mating surface about the opening in the external device, and
an actuation means (7) for moving the displacement means (9) in a first actuation between a ready state in which the first seal (5B) is intact and the valve is closed and an open state in which the first seal (5B) is separated from the coupling means (54) and moved with the displacement means (9) away from the mating surface so that the valve is open for passage of fluid, the actuation means (7) being engaged with the displacement means (9) via a connecting means (8, 10) and with the body (5), the connecting means (8, 10) enabling the displacement means (9) to move linearly and non-rotationally along a straight path within the body (5) without side deflection from said straight path;
**characterised in that**
the displacement means (9) includes a first plastically deformable portion (193) encircling an outer surface of a member of the displacement means (9) and the coupling means (54) includes a second plastically deformable portion (15) encircling its open area which becomes exposed when the first seal (5b) is separated therefrom, the displacement means (9) being movable in a second subsequent actuation to bring the first and second plastically deformable portions (193, 15) into engagement so as to form a second seal between said first and second portions (193, 15), the displacement means (9) comprising a face (195) continuous with the first portion (193) so that the second seal and the face close the fluid passage.

2. A valve as claimed in Claim 1, wherein a mutually engageable gripping means (5G) is provided on the first seal (5B) and on the displacement means (9) enabling the displacement (5B) means (9) to move the first seal away from the mating surface by stamping the first seal outwardly or withdrawing the first seal (5B) into the body of the valve.

3. A valve as claimed in Claim 2 wherein the gripping means (5G) comprise a snap-fit arrangement between the first seal (5B) and the seal displacement means (9) comprising first and second snap-fit members provided on the first seal (5B) and the seal displacement means (9), respectively.

4. A valve as claimed in Claim 3. wherein the first snap-fit member comprises a wall (5G) upstanding from the inner facing side of the first seal, the wall having a series of alternating ribs (501) and grooves (502) encircling an outer surface thereof, and the second snap-fit member is provided in a recess (19a) formed in a portion of the displacement means (9) proximal the first seal (5B) in use, the recess (19a) being configured for receiving the wall (5G), the surface of the portion of the displacement means which defines the recess (19a) comprising a series of alternating ribs (19d) and grooves (19c) wich match those of the wall (5g) and encircle said surface, so that on assembly of the valve, when the wall is received in the recess, the ribs (501, 19d) of the wall and in the recess first resiliently deform allowing the wall to enter the recess, (19a) and then snap into respective grooves (504, 19c) of the wall (5g) and the recess (19a) to couple the first seal (5b) with the seal displacement means (9).

5. A valve as claimed in any preceding claim, wherein the continuous face (195) comprises a portion of the outer surface of the displacement means (9) facing the opening of the first end (2) of the valve and the outer face of the first seal (5b) wherein said portion of the displacement means (9) and the first seal (5b) are sealingly coupled together.

6. A valve as claimed in any preceding claim, wherein the displacement means (9) is engaged with the actuation means (7) via the connecting means (8, 10) so that during third and subsequent alternating actuations the first and second plastically deformable portions (193, 15) alternately separate and engage again in order to re-open or re-close the valve.

7. A valve as claimed in any preceding claim, wherein the displacement means (9) is engaged with the actuation means (7) via the connection means (8, 10) so that during the first actuation the connection means (8, 10) causes the displacement (9) means to move within the body in a direction towards the second end (2) of the valve, and the first seal is withdrawn into the interior of the body (5); and during the second subsequent actuation the connection means (8, 10) causes the displacement means (9) to move in the reverse direction towards the first end (2) of the valve to engage the first and the second plastically deformable portions (193, 15) and form the second seal.

8. A valve as claimed in any of Claims 1 to 6, wherein the displacement means (9) is engaged with the actuation means (7) via the connection means (8, 10) so that during the first actuation the connection means (8, 10) causes the displacement means (9) to move within the body (5) in a direction towards the first end (2) of the valve, and the first seal (5b) is pushed outwardly form the opening of the first end (2) of the valve into a passageway of a separate vessel; and during the second subsequent actuation the connection means (6, 10) causes the displacement means (9) to move further in the same direction to engage the first and the second plastically deformable portions (193, 15) and form the second seal.

9. A valve as claimed in any preceding claim, wherein the first seal (5b) is formed integrally with the coupling means, (54) and an endless weakened junction region (5d) is provided between the coupling means (54) and the first seal (5b), said junction region (5d) enclosing the seal (5b) and said junction region (5d) comprising at least one fracture line so that when the displacement means (9) moves on first actuation to open the valve it ruptures the junction region (5d) along the at least one fracture line thus separating the first seal (5b) from the coupling means (54) and opening the valve for passage of fluid; and wherein the reduction in thickness is obtained by forming a notch between the first seal and the coupling means wherein the notch is defined by a pair of converging surfaces, one of which belongs to the first seal (5b) and the other of which belongs to the coupling means; (54) and wherein the line of intersection of said surfaces defines the fracture line of the weakened junction region (5d).

10. A valve as claimed in Claim 9, wherein the converging surface of the coupling means (54) is substantially parallel to a longitudinal axis extending between the ends of the valve.

11. A valve as claimed in Claim 9 or Claim 10, wherein the junction region (5d) has a substantially uniform cross-section along the entire length thereof.

12. A valve as claimed in any preceding claim, wherein in a ready state of the valve, the first and second plastically deformable portions (193, 15) are axially separated along a longitudinal axis of the valve extending between the ends (2, 3) of the valve and the displacement means (9) is engaged with the actuation means (7) via the connecting means (8, 10) so that the distance travelled by the displacement means (9) on the second actuation is sufficient to bring said portions (193, 15) into engagement to form the second seal.

13. A valve as claimed in any preceding claim, wherein one of the first and the second plastically deformable portions (193, 15) has an endless encircling sharp rim (15) and the other plastically deformable portion has an endless encircling curved surface area (193) so that when the displacement means (9) is moved to close the valve, the sharp rim (15) engages the curved surface area (193) and displaces a portion of the curved surface area (193) thereby deforming the materials of the sharp rim (15) and the curved surface area (193) to form the second seal at the opening of the valve.

14. A valve as claimed in Claim 13, wherein the first plastically deformable portion (193) is integrally formed with the member (19) of the displacement means (9), said member (19) being disposed proximal the first open (2) end of the valve in use and comprising the curved surface area; (193) and the second plastically deformable portion (15) is integrally formed with the coupling means (54) and comprises the sharp rim (15).

15. A valve as claimed in Claims 14, wherein the displacement means (9) comprises a piston having an internal bore (4) which defines a portion of the fluid passageway of the valve, the piston having a first end which is open and a second end, the member comprising the curved surface area (193) being provided at the second end of the piston; the piston further comprising one or more apertures (18a) provided in a wall of the piston adjacent the second end of the piston so that fluid may pass between the interior of the piston and the first end of the valve via the or each aperture.

16. A valve as claimed in Claim 15, wherein the actuation means (7) comprises a hollow actuator body (71, 710) movably mounted on the exterior of the valve body (5), the actuator body (71, 710) being connected to the piston via a cam pair (8) to translate movement of the actuator (7) in relation to the valve body (5) into movement of the piston within the valve body (5), said cam pair (8) cooperating with a guide means to enable the linear non-rotational motion of the piston along a straight path in the fluid passageway of the valve body (5) so that no side deflection of the piston (9) occurs during said motion.

17. A valve as claimed in Claim 16, wherein the actuator has a cam (8) on the internal surface of the actuator, the cam (8) being engaged with at least one cam follower (10) mounted on the outer surface of the piston, and the guide means comprise at least one elongate through slot (5a) formed in the wall of the body (5) and extending substantially parallel to the longitudinal axis of the valve body (5), the cam follower (10) being movable along the through slot (5a), said slot guiding the cam follower (10) during the relative motion of the actuator about the body to effect displacement of the piston within the housing (5).

18. A valve as claimed in Claim 17, wherein the cam has a first region (8a) for moving the first seal away from the position blocking the opening of the valve, a second region (8c) for displacing the piston in order to engage the first and second portions (193, 15) to from the second seal.

19. A valve as claimed in Claim 18, wherein the valve body (5) and the actuator (7) are cylindrical and the actuator (7) is rotatably mounted on the cylindrical exterior of the body (5), the cam (8) being endless and encircling the internal surface of the actuator (7) and wherein a return region connects a start end of the first cam region and a terminal end of the second cam region to enable multiple revolutions of the actuator (7) about the housing (5) for repeated re-opening and re-closing of the valve.

20. A valve as claimed in any of Claims 16 to 19, wherein the actuation means (7) includes a releasable safety lock means (77, 61, 62, 63) for preventing undesired movement of the seal displacement means (9) and a handle (73) by operation of which a user moves the actuator relative to the body, and the safety lock means comprises a tongue (77) releasably engageable with the body (5) for preventing movement of the actuator, the tongue being releasably engagable with the body (5) upon completion of each actuation.

21. A valve as claimed in any of Claims 16 to 20, wherein the valve has a stop means for preventing the actuator from moving in a reverse direction about the body after completion of any actuation.

22. A valve as claimed in any of Claims 16 to 21, including a non-releasable lock for blocking the actuator on completion of the second actuation of the valve.

23. A valve as claimed in any preceding claim, wherein first and second seals close each of the first and second open ends (2, 3) of the body, the second end of the valve including a second coupling means (54) having a first seal (5b) formed therewith, each first seal being movable by a separate displacement means (9) axially spaced apart from each other within the body and wherein each displacement means (9) includes a first plastically deformable portion (193) and each coupling means (54) includes a second plastically deformable portion (15) so that both ends (2, 3) of the valve can be opened and/or closed.

24. A valve as claimed in Claim 23, wherein each displacement means is connected to a separate actuation means (8, 10) to enable independent opening and closing of the valve ends.

25. A valve as claimed in Claim 23, wherein each displacement means (8, 10) is connected to the same actuation means (750).

26. A valve as claimed in any of Claims 1 to 22, comprising a pair of bodies each having first and second open ends, (2, 3) the bodies being coupled to each other at the second ends so that the passageway of the valve (4) extends between the opposing first ends of the pair of bodies and wherein first and second seals close the first open ends of the bodies, each first seal being movable by a separate displacement means disposed in its respective body and wherein each displacement means includes a first plastically deformable portion and a second plastically deformable portion surrounds the openings of the coupling means at each of the first ends so that the first ends of the valve can be opened and/or closed.

27. A valve as claimed in any preceding claim, including a third seal provided for sealing between the body (5) and the displacement means (9), the third seal comprising at least one deformable plastics rib (46) formed on the body or on the displacement means for contacting the other of the body or the displacement means (9) and for sealing between them when they are stationary or moving relative to one another.

28. A valve as claimed in Claim 27, in which the rib (46) is formed integrally with the body or the displacement means.

29. A valve as claimed in Claim 27 or Claim 28, in which the rib (46) is sufficiently deformable and flexible so that it drags or wipes along the surface with which it is in contact as the body (5) or the displacement means (9) slide with respect to one another.

30. A valve as claimed in any of Claims 27 to 29, in which a plurality of ribs (46) are provided, axially spaced apart from one another along the path of relative movement between the body (5) and the displacement means (9).

31. A valve as claimed in Claim 30, including at least one rib (46) formed intermediate the connecting means and the first end and at least one rib formed between the connecting means (8, 10) and the second end (3).

32. A process for the sterile transfer of fluid from a first vessel to a second vessel comprising the steps of:
a) coupling a first valve (1, 100, 700, 800) and a second valve according to any of Claims 1 to 31 to respective open ends of a length of a conduit (300);
b) placing the conduit with the valves attached in a bag and sterilising the bag and its contents;
c) opening the bag and removing the valve/conduit (1, 300) assembly thereby exposing the external sealing surfaces of the valves to environmental contamination;
d) coupling the first valve (1) to a first vessel and sterilising the interior of the first vessel thereby also resterilising the exposed face of the first valve;
e) transferring the first vessel with the attached valve/conduit (1, 300) assembly to the site of a second vessel;
f) coupling the second valve (1) to the second vessel and sterilising the interior of the second vessel thereby also resterilising the exposed face of the second valve; and
g) opening the valves (1) thereby breaking the first seal (5B) of each valve and allowing fluid to flow between the first and second vessels;
h) re-closing each valve by deploying the actuating means (7) to close the second seals;
i) sanitising the interiors of the first and second vessels together with the closed faces of the valves facing the vessels; and
j) de-coupling the valves (1) from the vessels and discarding the valve/conduit assembly (1, 300).

33. A process as claimed in Claim 32, including effecting any desired number of closing and opening steps of either valve (1) between steps g) and h).

## Patentansprüche

1. Ventil (1, 100, 700, 800) umfassend einen Körper (5) mit einem ersten und einem zweiten Ende (2, 3) und einen Verbindungsweg (4) für Fluid zwischen den Enden, wobei das erste Ende (2) ein Kupplungsmittel (54) umfasst, um den Körper dicht um die Öffnung einer externen Vorrichtung zu verbinden und eine erste Dichtung (5b), gebildet mit dem Kupplungsmittel (54), die den offenen Bereich des ersten Endes (2) schließt, die bei Verwendung deckend mit der Öffnung der externen Vorrichtung angebracht werden kann, wobei das Ventil weiter ein Dichtungsverschiebungsmittel (9) umfasst, das innerhalb des Körpers (5) beweglich ist, um die erste Dichtung (5b) zu verschieben und es dem Fluid zu ermöglichen, entlang des Verbindungswegs (4) zwischen den Enden (2, 3) zu strömen, wobei das Kupplungsmittel (54) und die erste Dichtung (5b) eine externe sterilisierbare Passfläche (5c) darstellen, um mit einer Passfläche um die Öffnung der externen Vorrichtung zusammenzupassen, und
ein Betätigungsmittel (7) zur Bewegung des Verschiebungsmittels (9) in einer ersten Betätigung zwischen einem einsatzbereiten Zustand, in dem die erste Dichtung (5b) intakt ist und das Ventil geschlossen ist, und einem offenen Zustand, in dem die erste Dichtung (5b) vom Kupplungsmittel (54) getrennt ist und mit dem Verschiebungsmittel (9) von der Passfläche weg bewegt wird, so dass das Ventil für das Durchströmen von Fluid geöffnet ist, wobei das Betätigungsmittel (7) mit dem Verschiebungsmittel (9) über ein Verbindungsmittel (8, 10) im eingriff ist und dem Verschiebungsmittel (9) ermöglicht, sich linear und nicht drehend entlang eines geraden Weges innerhalb des Körpers (5) zu bewegen, ohne von dem geraden Weg seitlich abgelenkt zu werden;
**dadurch gekennzeichnet, dass** das Verschiebungsmittel (9) einen ersten plastisch verformbaren Abschnitt (193) umfasst, der eine Außenfläche eines Teils des Verschiebungsmittels (9) umschließt, und **dadurch**, dass das Kupplungsmittel (54) einen zweiten plastisch verformbaren Abschnitt (15) umfasst, der seinen offenen Bereich umschließt, der freigelegt wird, wenn die erste Dichtung (5b) davon getrennt wird, wobei das Verschiebungsmittel (9) in einer zweiten nachfolgenden Betätigung bewegt werden kann, um den ersten und den zweiten plastisch verformbaren Abschnitt (193, 15) miteinander in Eingriff zu bringen, um eine zweite Dichtung zwischen dem ersten und dem zweiten Abschnitt (193, 15) zu bilden, wobei das Verschiebungsmittel (9) eine Seite (95) umfasst, die mit dem ersten Abschnitt zusammenhängt, so dass die zweite Dichtung und die Seite den Durchstrom des Fluids schließen.

2. Ventil nach Anspruch 1, wobei ein gegenseitig in Eingriff zu bringendes Greifmittel (5G) auf der ersten Dichtung (5b) und auf dem Verschiebungsmittel (9) bereitgestellt wird, das dem Verschiebungsmittel (9) ermöglicht, die erste Dichtung (5b) von der Passfläche wegzubewegen, indem die erste Dichtung (5b) nach außen zu pressen oder die erste Dichtung (5b) in den Körper (5) des Ventils zurückzuziehen.

3. Ventil nach Anspruch 2, wobei das Greifmittel (5g) eine Schnappanordnung zwischen der ersten Dichtung (5b) und dem Dichtungsverschiebungsmittel (9) umfasst, umfassend ein erstes und ein zweites Schnappteil, das mit einer ersten Dichtung (5b) bzw. einem Verschiebungsmittel (9) versehen ist.

4. Ventil nach Anspruch 3, wobei das erste Schnappteil eine Wand (5g) umfasst, die aus der Seite der nach innen zeigenden Seite der ersten Dichtung heraussteht, wobei die Wand eine Reihe von abwechselnden Rippen (501) und Nuten (502) aufweist, die die Außenfläche davon umschließen, und das zweite Schnappteil in einer Vertiefung (19a) bereitgestellt ist, der in einem Abschnitt des Verschiebungsmittels (9) gebildet ist, der proximal zur ersten Dichtung (5b) in Verwendung ist, wobei die Vertiefung konfiguriert ist, um die Wand (5g) aufzunehmen, wobei die Fläche des Abschnittes des Verschiebungsmittels, die die Vertiefung (19a) definiert, eine Reihe von abwechselnden Rippen (19d) und Nuten (19c) umfasst, die mit denjenigen der Wand (5g) zusammenpassen und die Fläche umschließt, so dass beim Zusammenbau des Ventils, denn die Wand in der Vertiefung aufgenommen wird, die Rippen (501, 19d) der Wand und in der Vertiefung sich zunächst elastisch verformen und es der Wand ermöglichen, in die Vertiefung (19a) einzudringen und dann in die entsprechenden Nuten (504, 19c) der Wand (5g) und der Vertiefung (19a) einzuschnappen, um die erste Dichtung mit dem Dichtungsverschiebungsmittel (9) zu koppeln.

5. Ventil nach einem der vorhergehenden Ansprüche, wobei die zusammenhängende Seite (195) einen Abschnitt der Außenseite des Verschiebungsmittels (9) umfasst, die der Öffnung des ersten Endes (2) des Ventils und der ersten Dichtung (5b) gegenüberliegt, wobei der Abschnitt des Verschiebungsmittels (9) und die erste Dichtung (5b) dicht aneinander gekoppelt sind.

6. Ventil nach einem der vorhergehenden Ansprüche, wobei das Verschiebungsmittel (9) mit dem Betätigungsmittel (7) über das Verbindungsmittel (8, 10) eingreift, so dass während dritter und folgender abwechselnder Betätigungen der erste und zweite plastisch verformbare Abschnitt (193, 15) sich abwechselnd trennen und wieder ineinander eingreifen, um das Ventil erneut zu öffnen und erneut zu schließen.

7. Ventil nach einem der vorhergehenden Ansprüche, wobei das Verschiebungsmittel (9) mit dem Betätigungsmittel (7) über das Verbindungsmittel (8, 10) eingreift, so dass während der ersten Betätigung das Verbindungsmittel (8, 10) bewirkt, dass sich das Verschiebungsmittel (9) innerhalb des Körpers (5) in Richtung auf das zweite Ende (2) des Ventils hin bewegt, und die erste Dichtung (5b) wird in das Innere des Körpers (5) zurückgezogen, uns wobei während der zweiten folgenden Betätigung das Verbindungsmittel (8, 10) bewirkt, dass sich das Verschiebungsmittel (9) in die entgegengesetzte Richtung auf das erste Ende (1) des Ventils hin bewegt, um den ersten und den zweiten plastisch verformbaren Abschnitt (193, 15) in Eingriff zu bringen und die zweite Dichtung zu bilden.

8. Ventil nach einem der Ansprüche 1 bis 6, wobei das Verschiebungsmittel (9) über das Verbindungsmittel (8, 10) mit dem Betätigungsmittel (8, 10) in Eingriff steht, so dass während der ersten Betätigung das Verbindungsmittel (8, 10) bewirkt, das sich das Verschiebungsmittel innerhalb des Körpers (5) in Richtung auf das erste Ende des Ventils (2) bewegt, und wobei die erste Dichtung von der Öffnung des ersten Endes (2) des Ventils in den Verbindungsweg eines anderen Gefäßes nach außen geschoben wird; und wobei während der zweiten folgenden Betätigung das Verbindungsmittel bewirkt, dass sich das Verschiebungsmittel (9) weiter in die gleiche Richtung bewegt, um den ersten und den zweiten plastisch verformbaren Abschnitt (193, 15) in Eingriff zu bringen und die zweite Dichtung zu bilden.

9. Ventil nach einem der vorhergehenden Ansprüche, wobei die erste Dichtung (5b) einstückig mit den Kupplungsmitteln (54) gebildet ist, und ein endlose verdünnter Übergangsbereich (5c) ist zwischen dem Kopplungsmittel (54) und der ersten Dichtung bereitgestellt, wobei der Übergangsbereich (5c) die Dichtung einschließt, und wobei der Übergangsbereich mindestens eine Bruchlinie umfasst, so dass das Verschiebungsmittel (9), wenn es sich auf der ersten Betätigung bewegt, um das Ventil zu öffnen, den Übergangsbereich (5c) entlang der mindestens einen Bruchlinie bricht und so die erste Dichtung (5b) vom Kupplungsmittel (54) trennt und das Ventil für das Durchströmen des Fluids öffnet; und wobei die Verringerung der Dicke durch die Bildung einer Kerbe zwischen er ersten Dichtung und dem Kopplungsmittel erhalten wird, wobei die Kerbe durch ein Paar zusammenlaufende Flächen definiert wird, von denen eine zur ersten Dichtung (5b) und die andere zum Kopplungsmittel gehört; und wobei die Schnittlinie der Flächen die Bruchlinie des verdünnten Übergangsbereichs definiert.

10. Ventil nach Anspruch 9, wobei die zusammenlaufende Fläche des Kopplungsmittels (54) im Wesentlichen parallel zu einer Längsachse ist, die sich zwischen den Enden des Ventils erstreckt.

11. Ventil nach Anspruch 9 oder Anspruch 10, wobei der Übergangsbereich (5c) einen im Wesentlichen gleichförmigen Querschnitt entlang der gesamten Länge davon aufweist.

12. Ventil nach einem der vorhergehenden Ansprüche, wobei in einem einsatzbereiten Zustand des Ventils der erste und der zweite plastisch verformbare Abschnitt (193, 15) axial entlang einer Längsachse des Ventils getrennt sind, die sich zwischen den Enden des Ventils (2, 3) erstreckt, und das Verschiebungsmittel (9) ist mit dem Betätigungsmittel (7) über das Verbindungsmittel (8, 10) im Eingriff, so dass die Distanz, die sich das Verschiebungsmittel (9) auf der zweiten Betätigung bewegt, ausreichend ist, um die Abschnitte (193, 15) in Eingriff zu bringen, um die zweite Dichtung zu bilden.

13. Ventil nach einem der vorhergehenden Ansprüche, wobei einer des ersten und zweiten plastisch verformbare Abschnitts (193, 15) einen endlosen umschließenden scharfen Rand (15) aufweist und der andere plastisch verformbare Abschnitt einen endlosen umschließenden gekrümmten Oberflächenbereich (193) aufweist, so dass, wenn das Verschiebungsmittel (9) bewegt wird, um das Ventil zu schließen, der scharfe Rand den gekrümmten Oberflächenbereich (193) eingreift und einen Abschnitt des gekrümmten Oberflächenbereichs (193) verschiebt und dabei die Materialien des scharfen Randes (15) und des gekrümmten Oberflächenbereiches (193) verformt, um die zweite Dichtung beim Öffnen des Ventils zu bilden.

14. Ventil nach Anspruch 13, wobei ein erster plastisch verformbarer Abschnitt (193) einstückig mit dem Teil (19) des Verschiebungsmittels (9) gebildet ist, wobei der Teil (19) proximal zum ersten offenen Ende (2) des Ventils in Verwendung angeordnet ist und den gekrümmten Oberflächenbereich (193) umfasst; und der zweite plastisch verformbare Abschnitt (15) vollständig mit dem Kopplungsmittel (54) gebildet ist und den scharfen Rand (15) umfasst.

15. Ventil nach Anspruch 14, wobei das Verschiebungsmittel (9) einen Kolben umfasst, der eine interne Bohrung (4) aufweist, die einen Abschnitt des Fluid-Verbindungsweges des Ventils definiert, wobei der Kolben ein erstes Ende aufweist, das offen ist, und ein zweites Ende, wobei der Teil den gekrümmten Oberflächenbereich (193) umfasst, der am zweiten Ende des Kolbens bereitgestellt ist; wobei der Kolben weiter eine oder mehrere Öffnungen (18c) umfasst, die in einer Wand des Kolbens, benachbart dem zweiten Ende des Kolbens, bereitgestellt ist, so das Fluid zwischen dem Inneren des Kobens und dem ersten Ende des Ventils über die oder jede Öffnung strömen kann.

16. Ventil nach Anspruch 15, wobei das Betätigungsmittel (7) einen hohlen Aktorkörper (71, 71b) umfasst, der beweglich außen am Ventilkörper (5) montiert ist, wobei der Aktorkörper (71, 71b) über ein Nockenpaar (8) mit dem Kolben verbunden ist, um Bewegung vom Aktor (7) bezüglich des Ventilkörpers (5) in Bewegung des Kolbens innerhalb des Ventilkörpers (5) zu übertragen, wobei das Nockenpaar (8) mit einem Führungsmittel zusammenarbeitet, um die lineare, nicht drehende Bewegung des Kolbens entlang eines geraden Weges im Fluid-Verbindungsweg des Ventilkörpers (5) zu ermöglichen, do dass während der Bewegung keine seitliche Abweichung des Kolbens auftritt

17. Ventil nach Anspruch 16, wobei der Aktor eine Nocke (8) auf der Innenfläche des Aktors aufweist, wobei die Nocke mit mindestens einem Ventilstößel (10) auf der Außenfläche des Kolbens montiert ist und das Führungsmittel mindestens einen verlängerten durchgehenden Schlitz (5a) umfasst, der in der Wand des Körpers (5) gebildet ist und sich im Wesentlichen parallel zur Längsachse des Ventilkörpers erstreckt, wobei der Ventilstößel (10) entlang des durchgehenden Schlitzes (5a) beweglich ist, wobei der Schlitz den Ventilstößel (10) während der relativen Bewegung des Aktors um den Körper führt, um eine Verschiebung des Kolbens innerhalb des Gehäuses (5) zu bewirken.

18. Ventil nach Anspruch 17, wobei die Nocke einen ersten Bereich (8a) aufweist, um die erste Dichtung von der Position, die die Öffnung des Ventils blockiert, weg zu bewegen, und einen zweiten Bereich (8c), um den Kolben zu verschieben, um den ersten und den zweiten Abschnitt (193, 15) einzugreifen, um die zweite Dichtung zu bilden.

19. Ventil nach Anspruch 18, wobei der der Ventilkörper (5) und der Aktor (7) zylindrisch sind und der Aktor (7) drehbar of dem zylindrischen Äußeren des Körpers (5) montiert ist, wobei der Nocken (8) endlos ist und die Innenfläche des Aktors (7) umschließt, und wobei ein Rückkehrbereich ein anfängliches Ende des ersten Nockenbereichs und ein abschließenden Ende des zweiten Nockenbereichs miteinander verbindet, um zahlreiche Undrehungen des Aktors (7) um das Gehäuse (5) für eine wiederholte erneute Öffnung und erneute Schließung des Ventils zu ermöglichen.

20. Ventil nach einem der Ansprüche 16 bis 19, wobei das Betätigungsmittel (7) ein entriegelbares Sicherheitsverschlussmittel (77, 61, 62, 63) umfasst, um eine unerwünschte Bewegung des Dichtungsverschiebungsmittels (9) zu verhindern, und einen Griff (73), durch dessen Betätigung ein Benutzer den Aktor hinsichtlich des Körpers bewegt, und wobei das Sicherheitsverschlussmittel eine Zunge (77) umfasst, die bei Beendigung jeder Betätigung entrigelbar mit dem Köper (5) in Eingriff gebracht werden kann.

21. Ventil nach einem der Ansprüche 16 bis 20, wobei das Ventil Stoppmittel umfasst, um zu verhindern, dass sich er Aktor nach der Beendigung jeder Betätigung in eine umgekehrte Richtung um den Körper bewegt.

22. Ventil nach einem der Ansprüche 16 bis 21, umfassend einen nicht entriegelbaren Verschluss, um den Aktor bei Beendigung der zweiten Betätigung des Ventils zu blockieren.

23. Ventil nach einem der vorhergehenden Ansprüche, wobei erste und zweite Dichtungen jedes der ersten und zweiten Enden (2, 3) des Körpers schließen, wobei das zweite Ende des Ventils ein zweites Kopplungsmittel (54) umfasst, das eine erste Dichtung (5b), die damit gebildet ist, aufweist, wobei jede erste Dichtung durch ein getrenntes Verschiebungsmittel (9) beweglich ist, die innerhalb des Körpers axial voneinander beabstandet sind, und wobei jedes Verschiebungsmittel (9) einen ersten plastisch verformbaren Abschnitt (193) umfasst, und jedes Kopplungsmittel (54) einen zweiten plastisch verformbaren Abschnitt (15) umfasst, so dass beide Enden (2,3) des Ventils geöffnet und/oder geschlossen werden können.

24. Ventil nach Anspruch 23, wobei jedes Verschiebungsmittel mit einem getrennten Betätigungsmittel (8, 10) verbunden ist, um eine unabhängige Öffnung und Schließung der Ventilenden zu ermöglichen.

25. Ventil nach Anspruch 23, wobei jedes Verschiebungsmittel (8, 10) mit dem gleichen Betätigungsmittel (750) verbunden ist.

26. Ventil nach einem der Ansprüche 1 bis 22, umfassend ein Paar Körper, wobei jeder ein erstes und ein zweites offenes Ende (2, 3) umfasst, wobei die Körper an den zweiten Enden aneinander gekoppelt sind, so dass sich der Verbindungsweg des Ventils (4) zwischen den gegenüberliegenden ersten Enden des Pares von Körpern erstreckt, und wobei die erste und die zweite Dichtung die ersten offenen Enden der Körper schließen, wobei jede erste Dichtung durch ein getrennten Verschiebungsmittel beweglich ist, das in seinem entsprechenden Körper angeordnet ist, und wobei jedes Verschiebungsmittel einen ersten plastisch verformbaren Abschnitt umfasst und ein zweiter plastisch verformbaren Abschnitt die Öffnungen des Kopplungsmittels an jedem der ersten Enden umgibt, so dass die ersten Enden des Ventils geöffnet und/oder geschlossen werden können.

27. Ventil nach einem der vorhergehenden Ansprüche, umfassend eine dritte Dichtung, bereitgestellt für die Dichtung zwischen dem Körper (5) und dem Verschiebungsmittel (9), wobei die dritte Dichtung mindestens eine verformbare Plastikrippe (51) umfasst, die auf dem Körper oder auf dem Verschiebungsmittel gebildet ist, um mit dem anderen des Körpers (5) oder des Verschiebungsmittels (9) in Kontakt zu treten, und um zwischen ihnen eine Dichtung herzustellen, wenn sie stationär sind oder sich in Bezug zueinander bewegen.

28. Ventil nach Anspruch 27, wobei die Rippe (51) einstückig mit dem Körper (5) oder dem Verschiebungsmittel (9) gebildet ist.

29. Ventil nach Anspruch 27 oder Anspruch 28, wobei die Rippe (51) ausreichend verformbar und flexibel ist, so dass sie entlang der Fläche zieht oder wischt, mit der sie in Kontakt ist, wenn der Körper (5) oder das Verschiebungsmittel (9) in Bezug zueinander gleiten.

30. Ventil nach einem der Ansprüche 27 bis 29, wobei eine Vielzahl von Rippen (51) bereitgestellt ist, die entlang des Weges der relativen Bewegung zwischen dem Körper (5) und dem Verschiebungsmittel (9) axial voneinander beabstandet sind.

31. Ventil nach Anspruch 30, umfassend mindestens eine Rippe (51), die zwischen dem Verschiebungsmittel und dem ersten Ende gebildet ist, und mindestens eine Rippe, die zwischen dem Verschiebungsmittel (8, 10) und dem zweiten Ende (3) gebildet ist.

32. Verfahren zur sterilen Übertragung von Fluid aus einem ersten Gefäß in ein zweites Gefäß, umfassend die folgenden Schritte:
a) Koppeln eines ersten Ventils (1, 100, 200, 800) und eines zweiten Ventils nach einem der Ansprüche 1 bis 31 an die entsprechenden offenen Enden einer Länge einer Leitung (306);
b) Anordnen der Leitung mit den befestigten Ventilen in einem Beutel und Sterilisieren des Beutels und seines Inhalts;
c) Öffnen des Beutels und Entfernen der Gruppe aus Ventils/der Leitung (1, 300) und dabei Aussetzen der äußeren Dichtungsflächen der Ventile an die Umweltverschmutzung;
d) Koppeln des ersten Ventils (1) an ein erstes Gefäß und Sterilisieren des Inneren des ersten Gefäßes, dabei auch erneutes Sterilisieren der ausgesetzten Fläche des ersten Ventils;
e) Übertragen des ersten Gefäßes mit der befestigten Gruppe aus Ventil/Leitung (1, 300) an den Standort eines zweiten Gefäßes;
f) Koppeln des zweiten Ventils (2) an ein zweites Gefäß und Sterilisieren des Inneren des zweiten Gefäßes, dabei auch erneutes Sterilisieren der ausgesetzten Fläche des zweiten Ventils; und
g) Öffnen der Ventile (1), dabei Brechen der ersten Dichtung (5b) jedes Ventils und ermöglichen des Flusses von Fluid zwischen dem ersten und dem zweiten Gefäß;
h) erneutes Schließen jedes Ventils durch Einsetzen der Betätigungsmittel (7), um die zweiten Dichtungen zu schließen;
i) Sterilisieren des Inneren des ersten und des zweiten Gefäßes zusammen mit den geschlossenen Seiten der Ventile, die den Gefäßen gegenüberliegen; und
j) Entkoppeln der Ventile (1) von den Gefäßen und Verwerfen der Gruppe aus Ventil/Leitung (1, 300).

33. Verfahren nach Anspruch 32, umfassend die Durchführung jeder gewünschten Anzahl von Verschluss- und Öffungsschritten jedes Ventils (1) zwischen Schritt g) und h).

## Revendications

1. Valve (1, 100, 700, 800) comprenant un corps (5) ayant des première et seconde extrémités ouvertes (2, 3) et une voie de passage (4) pour fluide entre les extrémités, la première extrémité (2) comprenant des moyens de couplage (54) pour raccorder de manière étanche le corps, autour d'une ouverture d'un dispositif externe et un premier joint d'étanchéité (5b) formé avec les moyens de couplage (54) fermant la zone ouverte de la première extrémité (2), qui à l'usage peut être alignée avec l'ouverture du dispositif externe, la valve comprenant en outre des moyens de déplacement de joint d'étanchéité (9) mobiles à l'intérieur du corps (5) afin de déplacer le premier joint d'étanchéité (5b) permettant au fluide de passer le long de la voie de passage (4) entre les extrémités (2, 3), les moyens de couplage (54) et le premier joint d'étanchéité (5b) présentant une surface de couplage externe stérilisable (5c) pour se coupler de manière étanche avec une surface de couplage autour de l'ouverture dans le dispositif externe, et
des moyens d'actionnement (7) pour déplacer les moyens de déplacement (9) lors d'un premier actionnement entre un état prêt dans lequel le premier joint d'étanchéité (5b) est intact et la valve est fermée et un état ouvert dans lequel le premier joint d'étanchéité (5b) est séparé des moyens de couplage (54) et déplacé avec les moyens de déplacement (9) à distance de la surface de couplage de sorte que la valve est ouverte pour le passage du fluide, les moyens d'actionnement (7) étant mis en prise avec les moyens de déplacement (9) via des moyens de raccordement (8, 10) et avec le corps (5), les moyens de raccordement (8, 10) permettant aux moyens de déplacement (9) de se déplacer de manière linéaire et non rotative le long d'une trajectoire droite à l'intérieur du corps (5) sans déviation latérale de ladite trajectoire droite ;
**caractérisée en ce que :**
les moyens de déplacement (9) comprennent une première partie plastiquement déformable (193) encerclant une surface externe d'un élément des moyens de déplacement (9) et les moyens de couplage (54) comprennent une seconde partie plastiquement déformable (15) encerclant sa zone ouverte qui est exposée lorsque le premier joint d'étanchéité (5b) en est séparé, les moyens de déplacement (9) étant mobiles lors d'un second actionnement successif pour amener les première et seconde parties plastiquement déformables (193, 15) en mise en prise pour former un second joint d'étanchéité entre lesdites première et seconde parties (193, 15), les moyens de déplacement (9) comprenant une face (195) continue avec la première partie de sorte que le second joint d'étanchéité et la face ferment le passage de fluide.

2. Valve selon la revendication 1, dans laquelle des moyens de préhension pouvant mutuellement se mettre en prise (5G) sont prévus sur le premier joint d'étanchéité (5b) et sur les moyens de déplacement (9) permettant aux moyens de déplacement (9) d'éloigner le premier joint d'étanchéité (5b) de la surface de couplage en estampant le premier joint d'étanchéité (5b) vers l'extérieur ou en retirant le premier joint d'étanchéité (5b) dans le corps (5) de la valve.

3. Valve selon la revendication 2, dans laquelle les moyens de préhension (5g) comprennent un agencement d'emboîtement par pression entre le premier joint d'étanchéité (5b) et les moyens de déplacement de joint d'étanchéité (9) comprenant des premier et second éléments d'emboîtement par pression prévus sur le premier joint d'étanchéité (5b) et les moyens de déplacement de joint d'étanchéité (9) respectivement.

4. Valve selon la revendication 3, dans laquelle le premier élément d'emboîtement par pression comprend une paroi (5g) montant à partir du côté orienté vers l'intérieur du premier joint d'étanchéité, la paroi ayant une série de nervures (501) et de rainures (502) alternées encerclant sa surface externe, et le second élément d'emboîtement par pression est prévu dans un évidement (19a) formé dans une partie des moyens de déplacement (9) à proximité du premier joint d'étanchéité (5b) à l'usage, l'évidement (19a) étant configuré pour recevoir la paroi (5g), la surface de la partie des moyens de déplacement qui définit l'évidement (19a) comprenant une série de nervures (19d) et de rainures (19c) alternées qui correspondent à celles de la paroi (5g) et encerclent ladite surface, de sorte que lors de l'assemblage de la valve, lorsque la paroi est reçue dans l'évidement, les nervures (501, 19d) de la paroi et dans l'évidement se déforment tout d'abord de manière élastique permettant à la paroi d'entrer dans l'évidement (19a) et ensuite de s'emboîter dans des rainures (504, 19c) de la paroi (5g) et de l'évidement (19a) pour coupler le premier joint d'étanchéité (5b) avec les moyens de déplacement de joint d'étanchéité (9).

5. Valve selon l'une quelconque des revendications précédentes, dans laquelle la face continue (195) comprend une partie de la surface externe des moyens de déplacement (9) faisant face à l'ouverture de la première extrémité (2) de la valve et la face externe du premier joint d'étanchéité (5b) dans laquelle ladite partie des moyens de déplacement (9) et le premier joint d'étanchéité (5b) sont couplés ensemble de manière étanche.

6. Valve selon l'une quelconque des revendications précédentes, dans laquelle les moyens de déplacement (9) sont mis en prise avec les moyens d'actionnement (7) via les moyens de raccordement (8, 10) de sorte que pendant les trois actionnements alternés et suivants, les première et seconde parties plastiquement déformables (193, 15) se séparent de manière alternée et se remettent en prise afin de rouvrir ou de refermer la valve.

7. Valve selon l'une quelconque des revendications précédentes, dans laquelle les moyens de déplacement (9) sont mis en prise avec les moyens d'actionnement (7) via les moyens de raccordement (8, 10), de sorte que pendant le premier actionnement, les moyens de raccordement (8, 10) amènent les moyens de déplacement (9) à se déplacer à l'intérieur du corps (5) dans une direction allant vers la seconde extrémité (2) de la valve et le premier joint d'étanchéité (5b) est retiré dans l'intérieur du corps (5) ; et pendant le second actionnement successif des moyens de raccordement (8, 10) amènent les moyens de déplacement (9) à se déplacer dans la direction inverse vers la première extrémité (2) de la valve pour mettre en prise les première et seconde parties plastiquement déformables (193, 15) et former le second joint d'étanchéité.

8. Valve selon l'une quelconque des revendications 1 à 6, dans laquelle les moyens de déplacement (9) sont mis en prise avec les moyens d'actionnement (7) via les moyens de raccordement (8, 10) de sorte que pendant le premier actionnement, les moyens de raccordement (8, 10) amènent les moyens de déplacement (9) à se déplacer à l'intérieur du corps (5) dans une direction allant vers la première extrémité de la valve (2) et le premier joint d'étanchéité (5b) est poussé vers l'extérieur depuis l'ouverture de la première extrémité (2) de la valve dans une voie de passage d'un récipient séparé ; et pendant le second actionnement successif, les moyens de raccordement (8, 10) amènent les moyens de déplacement (9) à se déplacer davantage dans la même direction pour mettre en prise les première et seconde parties plastiquement déformables (193, 15) et former le second joint d'étanchéité.

9. Valve selon l'une quelconque des revendications précédentes, dans laquelle le premier joint d'étanchéité (5b) est formé de manière solidaire avec les moyens de couplage (54) et une région de jonction affaiblie sans fin (5c) est prévue entre les moyens de couplage (54) et le premier joint d'étanchéité (5b), ladite région de jonction (50) enfermant le joint d'étanchéité (5b) et ladite région de jonction comprenant au moins une ligne de fracture de sorte que lorsque les moyens de déplacement (9) se déplacent suite au premier actionnement pour ouvrir la valve, ils rompent la région de jonction (5c) le long de la au moins ligne de fracture séparant ainsi le premier joint d'étanchéité (5b) des moyens de couplage (54) et ouvrant la valve pour le passage du fluide ; et dans laquelle la réduction d'épaisseur est obtenue en formant une encoche entre le premier joint d'étanchéité et les moyens de couplage, dans laquelle l'encoche est définie par une paire de surfaces convergentes, dont l'une appartient au premier joint d'étanchéité (5b) et dont l'autre appartient aux moyens de couplage (54) ; et dans laquelle la ligne d'intersection desdites surfaces définit la ligne de fracture de la région de jonction affaiblie (5G).

10. Valve selon la revendication 9, dans laquelle la surface convergente des moyens de couplage (54) est sensiblement parallèle à un axe longitudinal s'étendant entre les extrémités de la valve.

11. Valve selon la revendication 9 ou la revendication 10, dans laquelle la région de jonction (5c) a une section transversale sensiblement uniforme le long de toute sa longueur.

12. Valve selon l'une quelconque des revendications précédentes, dans laquelle dans un état prêt de la valve, les première et seconde parties plastiquement déformables (193, 15) sont séparées de manière axiale le long d'un axe longitudinal de la valve s'étendant entre les extrémités de la valve (2,3) et les moyens de déplacement (9) sont mis en prise avec les moyens d'actionnement (7) via les moyens de raccordement (8, 10) de sorte que la distance parcourue par les moyens de déplacement (9) suite au second actionnement, est suffisante pour amener lesdites parties (193, 15) en mise en prise pour former le second joint d'étanchéité.

13. Valve selon l'une quelconque des revendications précédentes, dans laquelle l'une des première et seconde parties plastiquement déformables (193, 15) a un bord saillant périphérique sans fin (15) et l'autre partie plastiquement déformable a une surface incurvée périphérique sans fin (193) de sorte que lorsque les moyens de déplacement (9) sont déplacés pour refermer la valve, le bord saillant (15) met en prise la surface incurvée (193) et déplace une partie de la surface incurvée (193) déformant ainsi les matériaux du bord saillant (15) et de la surface incurvée (193) pour former le second joint d'étanchéité à l'ouverture de la valve.

14. Valve selon la revendication 13, dans laquelle la première partie plastiquement déformable (193) est formée de manière solidaire avec l'élément (19) des moyens de déplacement (9), ledit élément (19) étant disposé à proximité de la première extrémité ouverte (2) de la valve à l'usage et comprenant la surface incurvée (193) ; et la seconde partie plastiquement déformable (15) est formée de manière solidaire avec les moyens de couplage (54) et comprend le bord saillant (15).

15. Valve selon la revendication 14, dans laquelle les moyens de déplacement (9) comprennent un piston ayant un alésage interne (4) qui définit une partie de la voie de passage de fluide de la valve, le piston ayant une première extrémité qui est ouverte et une seconde extrémité, l'élément comprenant la surface incurvée (193) étant prévu au niveau de la seconde extrémité du piston ; le piston comprenant en outre une ou plusieurs ouvertures (18c) prévues dans une paroi du piston adjacente à la seconde extrémité du piston de sorte que le fluide peut passer entre l'intérieur du piston et la première extrémité de la valve via la ou chaque ouverture.

16. Valve selon la revendication 15, dans laquelle les moyens d'actionnement (7) comprennent un corps actionneur creux (71, 71b) monté de manière mobile sur l'extérieur du corps de valve (5), le corps actionneur (71, 71b) étant raccordé au piston via une paire de cames (8) pour translater le mouvement de l'actionneur (7) par rapport au corps de valve (5) en un mouvement du piston à l'intérieur du corps de valve (5), ladite paire de cames (8) coopérant avec des moyens de guidage pour permettre le mouvement non rotatif linéaire du piston le long d'une trajectoire droite dans la voie de passage de fluide du corps de valve (5) de sorte qu'aucune déviation latérale du piston (9) ne se produit pendant ledit mouvement.

17. Valve selon la revendication 16, dans laquelle l'actionneur a une came (8) sur la surface interne de l'actionneur, la came (8) étant mise en prise avec au moins un poussoir de came (10) monté sur la surface externe du piston et les moyens de guidage comprennent au moins une fente de passage allongée (5a) formée dans la paroi du corps (5) et s'étendant de manière sensiblement parallèle à l'axe longitudinal du corps de valve (5), le poussoir de came (10) étant mobile le long de la fente de passage (5a), ladite fente guidant le poussoir de came (10) pendant le mouvement relatif de l'actionneur autour du corps pour effectuer le déplacement du piston à l'intérieur du boîtier.

18. Valve selon la revendication 17, dans laquelle la came a une première région (8a) pour déplacer le premier joint d'étanchéité à distance de la position bloquant l'ouverture de la valve, une seconde région (8c) pour déplacer le piston afin de mettre en prise les première et seconde parties (193, 15) pour former le second joint d'étanchéité.

19. Valve selon la revendication 18, dans laquelle le corps de valve (5) et l'actionneur (7) sont cylindriques et l'actionneur (7) est monté de manière rotative sur l'extérieur cylindrique du corps (5), la came (8) étant sans fin et encerclant la surface interne de l'actionneur (7) et dans laquelle une région de retour raccorde une extrémité de départ de la première région de came et une extrémité terminale de la seconde région de came pour permettre plusieurs révolutions de l'actionneur (7) autour du boîtier (5) afin de rouvrir et refermer la valve de manière répétée.

20. Valve selon l'une quelconque des revendications 16 à 19, dans laquelle les moyens d'actionnement (7) comprennent des moyens de blocage de sécurité amovibles (77, 61, 62, 63) pour empêcher le mouvement indésiré des moyens de déplacement de joint d'étanchéité (9) et une poignée (73) grâce au fonctionnement de laquelle un utilisateur déplace l'actionneur par rapport au corps, et les moyens de blocage de sécurité comprennent une languette (77) pouvant être mise en prise de manière amovible avec le corps (5) pour empêcher le mouvement de l'actionneur, la languette pouvant être mise en prise de manière amovible avec le corps (5) suite à l'achèvement de chaque actionnement.

21. Valve selon l'une quelconque des revendications 16 à 20, dans laquelle la valve a des moyens de butée pour empêcher l'actionneur de se déplacer dans une direction inverse autour du corps après l'achèvement de tout actionnement.

22. Valve selon l'une quelconque des revendications 16 à 21, comprenant un blocage non amovible pour bloquer l'actionneur suite à l'achèvement du second actionnement de la valve.

23. Valve selon l'une quelconque des revendications précédentes, dans laquelle les premier et second joints d'étanchéité ferment chacune des première et seconde extrémités ouvertes (2,3) du corps, la seconde extrémité de la valve comprenant des seconds moyens de couplage (54) ayant un premier joint d'étanchéité (5b) formé avec ceux-ci, chaque premier joint d'étanchéité étant mobile grâce à des moyens de déplacement (9) séparés axialement espacés l'un de l'autre à l'intérieur du corps, et dans laquelle chaque moyen de déplacement (9) comprend une première partie plastiquement déformable (193) et chaque moyen de couplage (54) comprend une seconde partie plastiquement déformable (15) de sorte que les deux extrémités (2,3) de la valve peuvent être ouvertes et/ou fermées.

24. Valve selon la revendication 23, dans laquelle chaque moyen de déplacement est raccordé à des moyens d'actionnement séparés (8, 10) pour permettre l'ouverture et la fermeture indépendantes des extrémités de valve.

25. Valve selon la revendication 23, dans laquelle chaque moyen de déplacement (8, 10) est raccordé aux mêmes moyens d'actionnement (750).

26. Valve selon l'une quelconque des revendications 1 à 22, comprenant une paire de corps ayant chacun des première et seconde extrémités ouvertes (2,3), les corps étant couplés entre eux au niveau des secondes extrémités de sorte que la voie de passage de la valve (4) s'étend entre les premières extrémités opposées de la paire de corps et dans laquelle les premier et second joints d'étanchéité ferment les premières extrémités ouvertes des corps, chaque premier joint d'étanchéité étant mobile grâce à des moyens de déplacement séparés disposés dans son corps respectif et dans lequel chaque moyen de déplacement comprend une première partie plastiquement déformable et une seconde partie plastiquement déformable entoure les ouvertures des moyens de couplage au niveau de chacune des premières extrémités de sorte que les premières extrémités de la valve peuvent être ouvertes et/ou fermées.

27. Valve selon l'une quelconque des revendications précédentes, comprenant un troisième joint d'étanchéité prévu pour réaliser l'étanchéité entre le corps (5) et les moyens de déplacement (9), le troisième joint d'étanchéité comprenant au moins une nervure en plastique déformable (51) formée sur le corps ou sur les moyens de déplacement pour entrer en contact avec l'autre parmi le corps (5) ou les moyens de déplacement (9) et pour réaliser l'étanchéité entre eux lorsqu'ils sont fixes ou mobiles l'un par rapport à l'autre.

28. Valve selon la revendication 27, dans laquelle la nervure (51) est formée de manière solidaire avec le corps (5) ou bien les moyens de déplacement (9).

29. Valve selon la revendication 27 ou la revendication 28, dans laquelle la nervure (51) est suffisamment déformable et flexible de sorte qu'elle se traîne ou s'essuie le long de la surface avec laquelle elle est en contact lorsque le corps (5) ou les moyens de déplacement (9) coulissent l'un par rapport à l'autre.

30. Valve selon l'une quelconque des revendications 27 à 29, dans laquelle on prévoit une pluralité de nervures (51) espacées de manière axiale les unes des autres le long de la trajectoire du mouvement relatif entre le corps (5) et les moyens de déplacement (9).

31. Valve selon la revendication 30, comprenant au moins une nervure (51) formée entre les moyens de raccordement et la première extrémité et au moins une nervure formée entre les moyens de raccordement (8, 10) et la seconde extrémité (3).

32. Procédé pour le transfert stérile d'un fluide d'un premier récipient à un second récipient comprenant les étapes consistant à :
a) coupler une première valve (1, 100, 700, 800) et une seconde valve selon l'une quelconque des revendications 1 à 31 aux extrémités ouvertes respectives d'une longueur d'un conduit (300) ;
b) placer le conduit avec les valves fixées dans un sachet et stériliser le sachet et son contenu ;
c) ouvrir le sachet et retirer l'ensemble de valve / conduit (1, 300) exposant ainsi les surfaces d'étanchéité externes des valves à la contamination environnementale ;
d) coupler la première valve (1) à un premier récipient et stériliser l'intérieur du premier récipient, restérilisant ainsi également la face exposée de la première valve ;
e) transférer le premier récipient avec l'ensemble de valve / conduit (1, 300) fixé vers le site d'un second récipient ;
f) coupler la seconde valve (1) au second récipient et stériliser l'intérieur du second récipient, restérilisant ainsi également la face exposée de la seconde valve ; et
g) ouvrir les valves (1), cassant ainsi le premier joint d'étanchéité (5b) de chaque valve et permettant au fluide de s'écouler entre les premier et second récipients ;
h) refermer chaque valve en déployant les moyens d'actionnement (7) pour fermer les seconds joints d'étanchéité ;
i) désinfecter les intérieurs des premier et second récipients ensemble avec les faces fermées des valves qui font face aux récipients ; et
j) découpler les valves (1) des récipients et jeter l'ensemble de valve / conduit (1, 300).

33. Procédé selon la revendication 32, comprenant l'étape consistant à effectuer n'importe quel nombre souhaité d'étapes d'ouverture et de fermeture de chaque valve (1) entre les étapes g) et h).
